(19) Europäisches Patentamt
European Patent Office
Office européen des brevets

(11) **EP 3 321 083 B1**

(12) **EUROPÄISCHE PATENTSCHRIFT**

(45) Veröffentlichungstag und Bekanntmachung des Hinweises auf die Patenterteilung:
**05.08.2020  Patentblatt 2020/32**

(51) Int Cl.:
***B32B 27/08*** *(2006.01)*      ***B32B 27/20*** *(2006.01)*
***B32B 27/36*** *(2006.01)*

(21) Anmeldenummer: **17199678.8**

(22) Anmeldetag: **02.11.2017**

(54) **BIAXIAL ORIENTIERTE, HEISSSIEGELBARE UND PEELFÄHIGE POLYESTERFOLIE, VERFAHREN ZU IHRER HERSTELLUNG UND IHRE VERWENDUNG**

BIAXIAL HEAT-SEALABLE AND PEELABLE POLYESTER FILMS, METHOD FOR THEIR PREPARATION AND THEIR USE

FEUILLES EN POLYESTER THERMOSCELLABLES ET PELABLES À ORIENTATION BIAXIALE, LEUR PROCÉDÉ DE FABRICATION ET D'UTILISATION

(84) Benannte Vertragsstaaten:
**DE FR GB IT PL TR**

(30) Priorität: **11.11.2016  DE 102016222146**

(43) Veröffentlichungstag der Anmeldung:
**16.05.2018  Patentblatt 2018/20**

(73) Patentinhaber: **Mitsubishi Polyester Film GmbH 65203 Wiesbaden (DE)**

(72) Erfinder:
• **Peiffer, Herbert**
  **55126 Mainz (DE)**
• **Bartsch, Stefan**
  **55116 Mainz (DE)**
• **Jesberger, Martin**
  **55128 Mainz (DE)**
• **Kolar, Petr**
  **65760 Eschborn (DE)**

(74) Vertreter: **Schweitzer, Klaus
Plate Schweitzer Zounek
Patentanwälte
Rheingaustrasse 196
65203 Wiesbaden (DE)**

(56) Entgegenhaltungen:
EP-A1- 1 410 905      EP-A1- 1 471 098
EP-A1- 1 529 799      EP-A2- 1 884 357
EP-A2- 1 942 002      US-A1- 2005 074 598

**Beschreibung**

**Patentfamilie**

Die Erfindung betrifft eine transparente, peelfähige Polyesterfolie bestehend aus einer biaxial orientierten Basisschicht (B) und mindestens einer auf dieser Basisschicht (B) offline aufgebrachten siegel- und peelfähigen Deckschicht (A). Die Deckschicht (A) ist heißsiegelbar und zeichnet sich durch eine mittlere bis feste Peelbarkeit, insbesondere zu APET und RPET-Menüschalen (APET = amorphes, transparentes Polyethylenterephthalat (PET), RPET = mindestens teilweise recycliertes, amorphes, transparentes PET) aus. Die heißsiegelbare und peelfähige Deckschicht (A) enthält Polyester auf Basis von aromatischen und aliphatischen Säuren und aliphatischen Diolen. Die Erfindung betrifft weiterhin ein Verfahren zur Herstellung der Folie und ihre Verwendung.

Transparente Menüschalen aus APET/RPET, die mit einer auf den Rand der Schale unter Temperatureinwirkung aufgesiegelten Folie peelbar verschlossen werden, finden ihren Einsatz insbesondere bei Salaten und frischen Früchten. Wegen ihrer praktischen Handhabung erfreuen sie sich einer immer größeren Beliebtheit. Dies äußert sich beispielsweise darin, dass in Europa die Zuwachsraten für solche Produktlösungen derzeit im zweistelligen Prozentbereich liegen.

Salate oder frische Früchte werden nach ihrer Zubereitung in Menüschalen (engl. trays) eingefüllt. Auf den Rand der Menüschale wird eine Folie heißgesiegelt, die die Verpackung verschließt und das Fertiggericht gegen äußere Einflüsse schützt.

Die Heißsiegelung der amorphen und transparenten Menüschalen aus APET/RPET erfolgt bei Siegeltemperaturen im Wesentlichen zwischen 110 und 150 °C. Um die Wirtschaftlichkeit zu gewährleisten, ist die Siegelzeit in der Regel deutlich kleiner als eine Sekunde. Bei höheren Siegeltemperaturen als 150 °C sind die APET-, insbesondere aber die RPET-Menüschalen nicht mehr formstabil, sie neigen zum Verziehen.

Höhere Siegeltemperaturen (> 135 bis 150 °C) können bei hochwertigen Menüschalen aus größtenteils regeneratfreiem APET mit höheren Wanddicken (ca. 200 $\mu$m und mehr) angewendet werden. Niedrige Siegeltemperaturen (< 135 °C) werden insbesondere dann angewendet, wenn die Menüschalen geringere Wandstärken (ca. 200 $\mu$m und weniger) und einen vergleichsweise hohen Regeneratanteil aufweisen. Für die letztgenannten Menüschalen wird häufig die Abkürzung RPET verwendet.

Unabhängig von der angewandten Siegeltemperatur wird von der Packung - auch nach Lagerung im Kühlschrank oder in der Gefriertruhe - gefordert, dass die aufgesiegelte Folie einwandfrei unter Aufwendung einer spürbaren Kraft von der Menüschale abgezogen werden kann, ohne dabei einzureißen. Dieses Verhalten wird allgemein mit "cold peel" bezeichnet.

Die Folie gemäß der vorliegenden Erfindung ist zu Menüschalen aus APET und RPET heißsiegelbar und peelfähig. Bei vorgegebenem Material und vorgegebener Gesamtdicke der Folie werden die Siegelbarkeit und die Peelfähigkeit der Folie hauptsächlich von den Eigenschaften der Deckschicht (A), die auf der Menüschale gesiegelt ist, bestimmt.

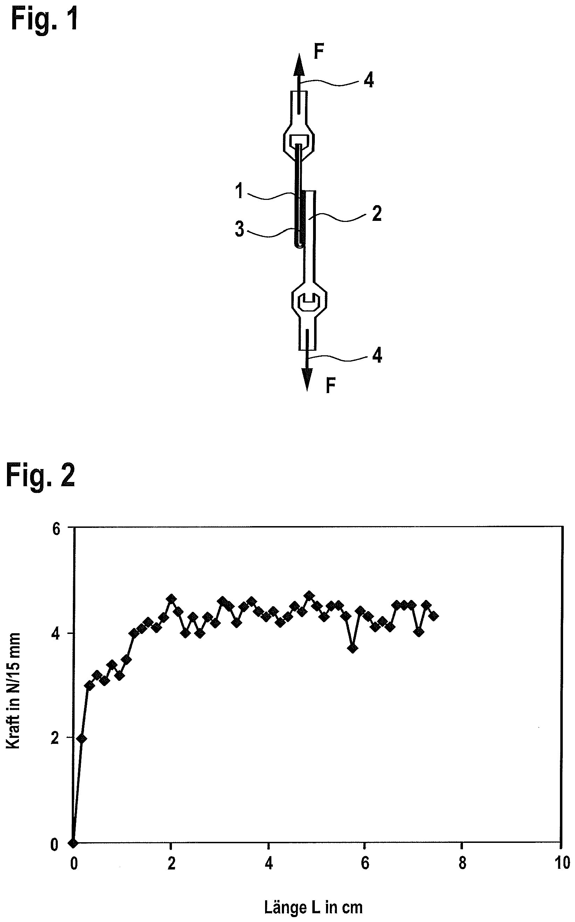

Die Peelfähigkeit von Folien lässt sich labormäßig relativ einfach mit einem Spannungs-Dehnungstester (z.B. Zwick) feststellen (vgl. Figur 1). Für diesen Test werden aus der Folie und der Menüschale zwei 15 mm breite und circa 50mm lange Streifen ausgeschnitten und gegeneinander gesiegelt. Die Siegelschicht der Folie (1) bildet die Schicht (A) (3) und die Siegelschicht der Menüschale (2) die innen liegende Schicht der Schale. Die gesiegelten Streifen werden - wie die Figur zeigt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200mm/min auseinander gefahren (4), wobei die Folie von der Menüschale vollständig abgeschält werden soll, ohne dabei einzureißen oder gar zu reißen.

Eine peelfähige Folie wird erhalten, wenn die Zug- oder die Schälkraft (angegeben in N/15 mm Folienbreite) bis zu einem bestimmten Wert/Plateau ansteigt und dann über die Strecke, über die die beiden Streifen miteinander gesiegelt sind, in etwa konstant bleibt (vgl. Figur 2). Die Folie reißt nicht ein, sondern lässt sich wie gewünscht von der Menüschale mit definiertem Kraftaufwand abschälen (engl. peelen).

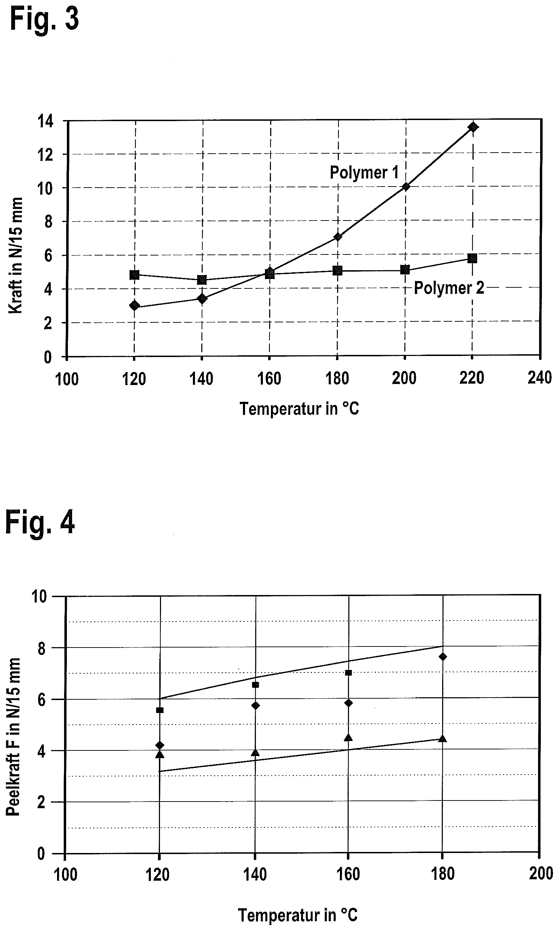

Die Höhe der Peelkraft (in N/15 mm) wird maßgeblich von den in der Heißsiegelschicht (A) verwendeten Polymeren bestimmt (vgl. Figur 3), Polymer 1 im Vergleich zu Polymer 2). Daneben ist die Höhe der Peelkraft z.B. abhängig von der Dicke der Heißsiegelschicht (A), der angewandten Heißsiegeltemperatur und der Heißsiegelzeit, sowie dem Druck zwischen den beiden Siegelbacken.

Die Peelkraft kann beispielsweise mit der Heißsiegeltemperatur stark ansteigen (vgl. Figur 3, Polymer 1). Mit zunehmender Heißsiegeltemperatur wächst dabei die Gefahr, dass die Siegelschicht ihre Peelfähigkeit verliert. D.h., eine Folie, die bei Anwendung einer geringen Heißsiegeltemperatur peelfähig ist, verliert diese Eigenschaft, wenn eine entsprechend hohe Heißsiegeltemperatur angewendet wird. Diesem für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl.

Polymer 2 in Figur 3). In der Praxis beträgt dieser Temperaturbereich im Allgemeinen 110 bis 150 °C, bevorzugt 112 bis 150 °C und besonders bevorzugt 115 bis 150 °C. Hierbei finden definierte Bedingungen, insbesondere der Siegelzeiten (≤ 1 s) und der Anpressdrücke Anwendung.

Die heißsiegelbare und peelfähige Schicht (A) wird gemäß der vorliegenden Erfindung mittels offline-Technologie in einem zusätzlichen, der Folienherstellung nachgeordneten Prozessschritt auf die Polyesterfolie (B) aufgebracht. Bei dieser Methode wird zunächst eine Polyesterfolie (B) mit definierten Eigenschaften nach üblichen Verfahren hergestellt. Die so hergestellte Polyesterfolie (B) wird dann in einem weiteren Verarbeitungsschritt in einer Beschichtungsanlage "offline" mit der heißsiegelbaren und peelfähigen Schicht (A) beschichtet.

Bei diesem Verfahren wird das heißsiegelbare und peelfähige Polymer für die Schicht (A) zunächst in einem organischen Lösungsmittel aufgelöst, bzw. dispergiert. Die fertige Lösung/Dispersion wird dann über ein geeignetes Antragsverfahren (z.B. Messergießer (Rakel), Raster- oder Gravurwalze (forward or reverse), Düse) auf die Folie appliziert. In einem nachgeschaltetem Trockenofen wird das Lösungsmittel verdunstet und das peelfähige Polymer bleibt als feste, peelfähige Schicht auf der Folie zurück.

Auf dem Markt werden nach dem aktuellen Stand verschiedene heißsiegelbare und peelfähige Polyesterfolien angeboten. Diese Folien unterscheiden sich im Aufbau und in der Zusammensetzung der Deckschicht (A). Sie gelangen entsprechend ihrer Peel-Eigenschaften in unterschiedliche Anwendungen.

Es ist z.B. üblich, die Folien von Seiten der Anwendung in Folien mit leichter Peelbarkeit (easy peel), mit mittelfester Peelbarkeit (medium peel) und mit starker Peelbarkeit (strong peel) zu unterteilen. Wesentliches quantifizierbares Unterscheidungsmerkmal zwischen diesen Folien ist die Höhe der jeweiligen Peelkraft entsprechend der Figur 2. Eine Einteilung wird an dieser Stelle wie folgt vorgenommen

| | |
|---|---|
| Leichte Peelbarkeit (easy peel) | Peelkraft im Bereich von ungefähr 2 bis 3N je 15 mm Streifenbreite |
| Mittelfeste Peelbarkeit (medium peel) | Peelkraft im Bereich von ungefähr 3 bis 7N je 15 mm Streifenbreite |
| Starke, widerstandsfähige Peelbarkeit (strong peel) | Peelkraft im Bereich von mehr als 7N je 15 mm Streifenbreite |

Wichtiges Kriterium hierbei ist, dass beim Abziehen der Folie von der Menüschale die Folie selbst nicht einreißen oder anreißen darf. Beim Abziehen muss die Peelfolie als Ganzes von der Menüschale zu entfernen sein, ohne das Reste der Trockenmasse der Beschichtung auf dem Rand der Menüschale zurückbleiben. Dieser Punkt ist beim Befüllen der Schalen wichtig, da in regelmäßigen Abständen das Peelverhalten bei der Befüllung der Menüschalen geprüft und das befüllte Gut erneut versiegelt wird. Die Schale mit dem Inhalt kann dann trotz Qualitätskontrolle weiter verwendet werden, indem diese erneut einwandfrei versiegelt werden kann. Diese "Reworkability" ist für die Wirtschaftlichkeit des Produkts sehr wichtig und entscheidet oft über die Auswahl der Folien.

Vom Markt werden weiterhin hohe optische Anforderungen an die Peelfolie gestellt; insbesondere hinsichtlich einer niedrigen Trübung von < 20 % und einer hohen "Clarity" von > 80 %, damit man das Füllgut (z.B. den frischen Salat oder das Obst) deutlich erkennen kann. Darüber hinaus ist aus den gleichen Gründen eine gute Antibeschlagwirkung (engl. Antifog) der Peelfolie wünschenswert.

**Stand der Technik**

Einige siegelbare und peelfähige PET-Folien sind bekannt.

In der EP-A 0 379 190 wird eine coextrudierte, biaxial orientierte Polyesterfolie beschrieben, die eine Trägerfolienschicht aus Polyester und mindestens eine Versiegelungsfolienschicht aus einer Polyester-Zusammensetzung umfasst. Das Polymer für die Versiegelungsfolienschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= fin Siegelung), beträgt mehr als $400 g_{force} \cdot$ cm/15mm (mehr als 4N $\cdot$ cm/15mm). Die Folie zeichnet sich durch gute Peeleigenschaften (mit Plateau-Charakter im Peeldiagramm) gegen sich selbst aus (d.h. Versiegelungsfolienschicht gegen Versiegelungsfolienschicht).

In der EP 1 475 228 B1 wird eine coextrudierte, peelfähige, transparente und biaxial orientierte Polyesterfolie mit einer Basisschicht (B) und mindestens einer auf dieser Basisschicht (B) aufgebrachten Deckschicht (A) beschrieben. Die Deckschicht (A) ist heißsiegelbar und zeichnet sich durch eine leichte bis feste Peelbarkeit, insbesondere zu APET/CPET-Menüschalen aus. Die Deckschicht (A) enthält Polyester auf Basis von aromatischen und aliphatischen Säuren und aliphatischen Diolen. Des Weiteren enthält die Deckschicht (A) ein mit Polyester unverträgliches Polymer (anti-PET-Polymer) in einer bestimmten Konzentration. Die Folie ist in ihren optischen Eigenschaften und in ihrem Peelverhalten gegenüber APET-Menüschalen verbesserungswürdig.

In der WO 02/05186 A1 wird ein Verfahren zur Herstellung peelfähiger Folien beschrieben, bei dem die heißsiegelbare, peelfähige Schicht inline auf die Polyesterfolie aufgebracht wird. Angewendet wird die sogenannte Schmelze-Beschichtung, wobei vorzugsweise die längsgestreckte Folie mit dem heißsiegelbaren, peelfähigen Polymer beschichtet wird. Das heißsiegelbare, peelfähige Polymer enthält Polyester auf Basis von aromatischen und aliphatischen Säuren, sowie auf Basis von aliphatischen Diolen. Die in den Beispielen offenbarten peelfähigen Polymere (Copolymere) haben Glasübergangstemperaturen von unterhalb (minus) -10 °C. Solche Copolyester sind sehr weich, weshalb sie sich nicht in üblichen Walzenstreckverfahren orientieren lassen und zum Verblocken auf der Rolle neigen. Die Dicke der heißsiegelbaren, peelfähigen Schicht beträgt weniger als 8 $\mu$m. In der Schrift wird die an sich bekannte Schmelze-Beschichtung von der an sich bekannten Extrusions-Beschichtung technisch und über die Viskosität der Schmelze abgegrenzt. Nachteilig an dem Verfahren ist, dass nur vergleichsweise dünnflüssige Polymere (max. 50 Pa*s) mit niedrigem Molekulargewicht verwendet werden können. Daraus resultieren nachteilige Peel-Eigenschaften der Folie.

Bezüglich aller vorgenannten Erfindungen gilt, dass das Peelverhalten, insbesondere das sogenannte Cold-Peelverhalten und die ("Reworkability" s. Erläuterung unten), nachteilig bei Siegelung gegen Menüschalen aus APET ist. Außerdem tritt ein sogenannter "Engelshaareffekt" auf, bei dem die Beschichtung beim Abziehen Fäden zieht.

In der WO 2015/148685 A1 wird eine Beschichtungsmischung beansprucht, die in einem Lösungsmittel gelöst ist und die auf einer Oberfläche von einem Verpackungsfilm angewendet werden kann. Die Beschichtungsmischung umfasst dabei die folgenden Bestandteile: Ein Lösungsmittel, ein Heißsiegelpolymer aus einem amorphen oder halbkristallinen Polyester oder Copolyester mit einer Glasübergangstemperatur zwischen -35 und 0 °C und einem "Ring und Ball" Erweichungspunkt zwischen 60 und 120 °C, wobei dieses Polymer in den genannten Lösungsmitteln löslich ist und des weiteren Antiblockadditive enthält. Wenn die Mischung auf einer Verpackungsfolie oder einem Film beschichtet und getrocknet wird, stellt sie eine heißsiegelfähige Beschichtung dar, die auf Form-, Füll- und Siegelmaschinen bei sehr niedrigen Temperaturen angewendet werden kann. Folien nach dieser Erfindung neigen bei Lagerung der Wickel dazu, infolge der niedrigen Glasübergangstemperatur mit sich selber zu versiegeln. Sie lassen sich damit nicht ohne Beschädigung von dem Wickel abziehen.

In der WO 2016/083521 A1 wird eine biaxial orientierte Polyesterfolie beansprucht, die aus einem Polyesterbasisfilm und einer heißsiegelbaren Beschichtung besteht. Die heißsiegelbare Beschichtung enthält ein oder mehrere amorphe Copolyester auf Basis von Einheiten aus Terephthalsäure, Naphthalindicarbonsäure und mindestens ein Diol, wobei die heißsiegelbare Beschichtung 20 bis 50 Gew.-% Terephthalsäure-Einheiten und 5 bis 25 Gew.-% Naphthalindicarbonsäure-Einheiten enthält. Die biaxial orientierte und beschichtete Polyesterfolie besitzt ein hohes Rissverhältnis gebildet aus der Rissbildungskraft gemessen nach ASTM D-1004 und der totalen Foliendicke von mindestens 37 gf/$\mu$m in mindestens einer der beiden Richtungen: Längs- und Querrichtung. Die Filme sind heißsiegelbar und peelfähig gegenüber Behälter aus Polyester und Aluminium. Die Erfindung betrifft weiterhin ein Verfahren zur Herstellung solcher Folien und die Verwendung der Folie in der Lebensmittelverpackung. Die Folie ist in ihrem Peelverhalten gegenüber APET-, insbesondere aber gegenüber RPET- Menüschalen verbesserungswürdig. Das Peelverhalten der Folie gegenüber den genannten Materialien ist zu schwach (easy peel).

EP1942002 zeigt in den Beispielen eine transparente, peelfähige Polyesterfolie umfassend eine biaxial orientierte Polyesterfolie Basisschicht und eine darauf offline beschichtete peelfähige Deckschicht, wobei die Deckschicht 70-80 Gew.-% aus einem Polyester aus aromatischen und aliphatischen Dicarbonsäuren und aliphatischen Diolen aufgebaut ist, und 2 Gew.-% synthetisches SiO$_2$ mit einem Partikeldurchmesser d50 von 3,4 $\mu$m enthält.

## Aufgabenstellung

Aufgabe der vorliegenden Erfindung war es, eine mit einer offline-Beschichtung versehene, heißsiegelbare und peelfähige, biaxial orientierte Polyesterfolie zur Verfügung zu stellen, die sich durch hervorragende Siegel- und Peeleigenschaften gegenüber Menüschalen auszeichnet, insbesondere gegenüber Menüschalen, die aus APET (amorph) und RPET (Recyclat enthaltenes PET) bestehen und die Nachteile des Standes der Technik nicht aufweisen. Sie soll sich insbesondere durch die folgenden Punkte/Eigenschaften auszeichnen

- Sie soll gegenüber APET- und RPET -Menüschalen eine feste Peelbarkeit (medium peel) zeigen. Die Peelkraft soll im Bereich von 3 bis 7 N/15mm, liegen.
- Die heißsiegelbare und peelfähige Schicht gegenüber APET- und RPET-Menüschalen soll eine Mindestsiegeltemperatur von 110 °C aufweisen, wobei die maximale Siegeltemperatur im Allgemeinen ca. 160 °C beträgt (bei 0,5 s Siegelzeit und einem definierten Anpressdruck (s. Messmethoden weiter unten)).
- Die Folie soll sich wirtschaftlich herstellen lassen. Dies bedeutet beispielsweise auch, dass zur Herstellung der Basisfolie (Schicht B) in der Industrie übliche Verfahren eingesetzt werden können.
- Die optischen Eigenschaften der Folie sollen sehr gut sein. Dies bedeutet beispielsweise eine niedrige Trübung (kleiner als 20 %), eine hohe Clarity (größer als 80 %) und eine hohe Transparenz (größer als 90 %).

- Das Wickelverhalten und die Verarbeitbarkeit der Folie, insbesondere bei und nach der Beschichtung, bei der Bedruckung, generell beim Transport bei erhöhten Temperaturen, bei der Kaschierung oder bei der Siegelung der beschichteten Folie gegen die Menüschale soll gut sein. Die Folie soll sich, ohne zu Verblocken und ohne zu Verkleben auf- und abwickeln lassen, z.B. Beim Schneiden der Mutterrolle in kleinere Schnittrollen oder beim Abwickeln der Schnittrollen bei der Verarbeitung beim Endkunden.

Außerdem soll dafür Sorge getragen werden, dass die Folie auf schnelllaufenden Maschinen verarbeitet werden kann. Es sollen sich dabei gleichzeitig die auszeichnenden Eigenschaften der eingesetzten biaxial orientierten Polyesterfolien nicht verschlechtern. Hierzu gehören insbesondere die mechanischen Eigenschaften der Folie. Der E-Modul der beschichteten Folie sollte größer als 3000 $N/mm^2$ sein und der Schrumpf der beschichteten Folie sollte nicht größer als 2,5 % sein.

## Lösung der Aufgabe

Gelöst wird die Aufgabe durch die Bereitstellung einer mit einer offline-Beschichtung versehenen transparenten, heißsiegelbaren und peelfähigen Polyesterfolie enthaltend eine biaxial orientierte Basisschicht (B) und eine darauf beschichtete heißsiegelbare und gegenüber APET- und RPET- Menüschalen peelfähige Deckschicht (A), wobei die heißsiegelbare und peelfähige Deckschicht (A) aus

a) 85 - 99 Gew.-% Peel-Polyester und
b) 1 - 15 Gew.-% aus weiteren Substanzen besteht, wobei
c) die Dicarbonsäure-Komponenten des Peel-Polyesters aus 25-95 Mol-% an Einheiten aufgebaut ist, die auf mindestens eine aromatische Dicarbonsäure und 5-75 Mol-% an Einheiten, die auf mindestens eine aliphatische Dicarbonsäure zurückgehen, wobei die Summe der von diesen Dicarbonsäuren abgeleiteten Einheiten 100 Mol-% ergibt und
d) die Diol-Komponente des Peel-Polyesters aus mindestens 10 Mol-% an Einheiten aufgebaut ist, die auf lineare oder verzweigte Diole mit größer als 2 C-Atomen zurückgehen, wobei die Summe aller Diol-Komponenten 100 Mol-% ergibt und
e) der arithmetische Mittelwert der absoluten Ordinatenwerte $S_a$ der Deckschicht (A) kleiner ist als 300 nm und reduzierte Spitzenhöhe $S_{pk}$ der Deckschicht (A) kleiner ist als 700 nm.
f) die Deckschicht Partikel mit einem mittleren Partikeldurchmesser d50 von 2,0 bis 8 $\mu$m in einer Konzentration von 0,1 bis 10 Gew.-% enthält.

Im Vorstehenden wie im Folgenden bezieht sich Gew.-% immer auf die jeweilige Schicht oder das jeweilige System in dessen Zusammenhang die Angabe genannt ist, sofern nichts anderes gesagt ist.

## Deckschicht (A)

Die heißsiegelbare und peelfähige Deckschicht (A) besteht überwiegend aus Polyestern, die aufgebaut sind aus Einheiten, die von aromatischen und aliphatischen Dicarbonsäuren abgeleitet sind.
Die auf die aromatischen Dicarbonsäuren zurückgehenden Einheiten sind in dem Peel-Polyester in einer Menge von 25-95 Mol-%, bevorzugt 40-90 Mol-%, besonders bevorzugt 50-88 Mol-% enthalten. Die auf die aliphatischen Dicarbonsäuren zurückgehenden Einheiten sind in dem Peel-Polyester in einer Menge von 5-75 Mol-%, bevorzugt 10-60 Mol-%, besonders bevorzugt 12-50 Mol-% enthalten, wobei die Mol-%-Angaben sich immer zu 100 % ergänzen. Das Abweichen von den o.g. erfindungsgemäßen Verhältnissen an aromatischen und aliphatischen Diacarbonsäuren führt u.a. entweder zu einer nicht ausreichenden Haftung der Deckschicht (A) an der Basisschicht (B) (bei zu geringem aromatischen Anteil an Dicarbonsäuren) oder zu einer nicht erfindungsgemäßen Peel-Kraft bzw. Siegelanspringtemperatur (= Mindestsiegeltemperatur).
1 bis zu 15 Gew.-% des Materials der Deckschicht (A) besteht aus weiteren Substanzen wie Partikeln, Additiven, Hilfsmitteln und/oder sonstigen in der Polyesterfolientechnologie üblicherweise verwendeten Zusatzstoffen. Als mögliche weitere Zusatzstoffe für die Deckschicht (A) werden Antiblockmittel, Gleitmittel, insbesondere aber geeignete Antifogmittel eingesetzt, die in bestimmten Konzentrationen dem Peel-Polyester, bzw. der Lösung - bestehend aus Peel-Polyester, inklusive weiterer Substanzen und Lösemittel - zugegeben werden.
Die heißsiegelbare und peelfähige Deckschicht (A) zeichnet sich durch charakteristische Merkmale aus. Sie besitzt eine Siegelanspringtemperatur (= Mindestsiegeltemperatur) gegenüber APET- und RPET- Menüschalen von nicht mehr als 115 °C, bevorzugt nicht mehr als 112 °C und besonders bevorzugt nicht mehr als 110 °C und eine Siegelnahtfestigkeit (= Peel-Kraft) gegenüber APET- und RPET - Menüschalen von mindestens 3,0 N, bevorzugt mindestens 3,1 N, besonders bevorzugt mindestens 3,2 N (immer bezogen auf 15mm Folienbreite). Die heißsiegelbare und peelfähige Deckschicht (A) hat gegenüber APET- und RPET-Menüschalen eine max. Siegeltemperatur von ca. 160 °C, bevorzugt 155 °C und besonders bevorzugt 150 °C, wobei im gesamten Siegelbereich von 110 bis 160 °C eine gegenüber APET- und RPET- Menüschalen peelfähige Folie erhalten wird.

Für die bevorzugten, oben angegebenen Bereiche lassen sich die Peelergebnisse auch zahlenmäßig beschreiben. Entsprechend den vorliegenden Untersuchungen können die Peelergebnisse nach der vorliegenden Erfindung durch den folgenden Zusammenhang zwischen der Siegeltemperatur $\vartheta$ (in °C) und der Peelkraft $F$ (in N/15mm) miteinander korreliert werden

$$0,018 \bullet \vartheta /{}^\circ C + 0,5 \leq Peelkraft \ \ F / N \ je 15mm \leq 0,03 \bullet \vartheta /{}^\circ C + 2,5$$
$$120 \leq \vartheta /{}^\circ C \leq 150$$

Dieser Zusammenhang ist graphisch zur Veranschaulichung in Figur 4 dargestellt.

**Basisschicht (B) = biaxial orientierte Polyesterfolie**

Die Folie nach der vorliegenden Erfindung enthält eine Basisschicht (B), welche eine transparente biaxial orientierte Polyesterfolie ist. Auf diese wird mindestens eine erfindungsgemäße siegelfähige und peelbare Deckschicht (A) mittels offline-Beschichtungstechnologie aufgebracht.

Die Basisschicht (B) ist eine transparente ein- oder mehrschichtige biaxial orientierte Polyesterfolie und besteht zu mindestens 80 Gew.-% aus thermoplastischem Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus Ethylenglykol oder 1,3-Propylenglykol und 2,5-Furandicarbonsäure (FDCA), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden (bei der Angabe der Mengen für die Dicarbonsäuren bildet die Gesamtmenge aller Dicarbonsäuren 100 Mol-%. Analog bildet die Gesamtmenge aller Diole auch 100 Mol-%.).

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ geeignet.

Besonders vorteilhaft ist es, wenn die Basisschicht (B) eine biaxial orientierte Polyesterfolie ist, die aus einem Copolyester aufgebaut ist, dessen Dicarbonsäure-Komponenten auf Terephthalsäure abgeleitete Einheiten und eine geringe Menge (< 5 Mol-%) an Isophthalsäure abgeleitete Einheiten zurückzuführen sind. In diesem Fall sind die Herstellbarkeit der Folie und die optischen Eigenschaften der Folie besonders gut. Die Basisschicht (B) enthält dann im Wesentlichen ein Polyestercopolymer, das überwiegend aus Terephthalsäure und Isophthalsäure - Einheiten und aus Ethylenglykol-Einheiten (> 97 Mol-% an Dioleinheiten) zusammengesetzt ist.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindunen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die erhaltene biaxial orientierte Polyesterfolie ist damit antimonfrei, zumindest aber antimonarm. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

**Heißsiegelbare und peelfähige Deckschicht (A)**

Die Folie nach der vorliegenden Erfindung ist zumindest zweischichtig aufgebaut. In diesem Fall besteht die Folie aus der oben erläuterten Basisschicht (B) und der auf dieser durch offline-Beschichtungstechnologie aufgebrachten erfindungsgemäßen heißsiegelbaren und peelfähigen Deckschicht (A).

Die durch offline-Beschichtungstechnologie auf die biaxial orientierte Polyesterfolie = Basisschicht (B) aufgebrachte siegelbare und peelfähige Deckschicht (A) besteht überwiegend, d.h. zu mindestens ca. 85 Gew.-% aus einem Peel-Polyester.

Erfindungsgemäß ist der Peel-Polyester aus aromatischen und aliphatischen Dicarbonsäuren und aliphatischen Diolen aufgebaut. Die erfindungsgemäßen Peel-Polyester können sowohl Blends aus Homopolyestern als auch Copolyestern sowie Mischungen aus Co- und Homopolyestern sein, bevorzugt Blends aus Homo- und Copolyestern oder Blends aus verschiedenen Copolyestern auf Basis von aromatischen und aliphatischen Dicarbonsäuren und aliphatischen Diolen.

Beispiele für die erfindungsgemäß einsetzbaren aromatischen Dicarbonsäuren, die als abgeleitete Einheiten in dem Peel-Polyester vorhanden sein können, sind die Terephthalsäure, die Isophthalsäure, die Phthalsäure und die 2,6 Naphthalindicarbonsäure. Bevorzugt sind die Terephthalsäure und die Isophthalsäure.

Beispiele für die erfindungsgemäß einsetzbaren aliphatischen Dicarbonsäuren, die als abgeleitete Einheiten in dem Peel-Polyester vorhanden sein können, sind die Bernsteinsäure, die Glutarsäure, die Adipinsäure, die Pimelinsäure, die Korksäure, die Azelainsäure und die Sebazinsäure. Bevorzugt sind die Azelainsäure, die Sebazinsäure und die Adipinsäure.

Beispiele für die erfindungsgemäß einsetzbaren aliphatischen Diole, die als abgeleitete Einheiten in dem Peel-Polyester vorhanden sein können, sind Ethylenglykol, 1,3-Propandiol, 1,3-Butandiol, 1,4-Butandiol, 1,5-Pentandiol, 2,2-Dimethyl-1,3-Propandiol, Diethylenglykol, Triethylenglykol, 1,4-Cyclohexandimethanol und Neopentylglykol. Bevorzugt sind Ethylenglykol, Diethylenglykol, 1,2 Propandiol, Butandiol und Neopentylglykol.

Im Allgemeinen beinhaltet der Peel-Polyester die folgenden, von "Dicarbonsäure abgeleiteten Einheiten" und zum Anderen von "Diol abgeleiteten Einheiten", jeweils bezogen auf die gesamte Menge an Dicarbonsäure-basierten - bzw. Diol-basierten Wiederholungseinheiten:

- 25 bis 85 Mol-%, bevorzugt 30 bis 80 Mol-% und besonders bevorzugt 35 bis 70 Mol-% Terephthalat,

- 5 bis 50 Mol-%, bevorzugt 10 bis 45 Mol-% und besonders bevorzugt 15 bis 40 Mol-% Isophthalat,

- 5 bis 50 Mol-%, bevorzugt 5 bis 40 Mol-% und besonders bevorzugt 5 bis 30 Mol-% Adipat.

- 0 bis 30 Mol-%, bevorzugt 0 bis 20 Mol-% und besonders bevorzugt 0 bis 10 Mol-% Azelat,

- 5 bis 50 Mol-%, bevorzugt 5 bis 40 Mol-% und besonders bevorzugt 5 bis 30 Mol-% Sebazat,

- Mehr als 10 Mol-%, bevorzugt mehr als 11 Mol-% und besonders bevorzugt mehr als 12 Mol-% Ethylenglykol

- Ein oder mehrere Diole ausgewählt aus der Gruppe $C_3$ bis $C_7$ - Diolen, Di-, Tri- oder Tetra- $C_2$ bis $C_4$-Alkylen-Glykole, sowie Kombinationen hieraus, in Mengen von größer 10 Mol-%. Unter $C_3$ bis $C_7$ - Diolen werden insbesondere verstanden: Propylen-, Butylen- und Neopentylglykol. Unter den Di- bis Tetra-Alkylenglykolen insbesondere: Diethylenglykol, Triethylenglykol oder Dipropylenglykol.

Erfindungsgemäß liegt die Glasübergangstemperatur des Peel-Polyesters der heißsiegelbaren und peelfähigen Deckschicht (A) zwischen 0 und 30 °C. Bevorzugt liegt die Glasübergangstemperatur zwischen 0 und 27 °C und besonders bevorzugt zwischen 0 und 25 °C. Ist die Glasübergangstemperatur des Polyesters kleiner als 0 °C, kann die Folie nicht verfahrenssicher weiterverarbeitet werden. Die Klebeneigung der Deckschicht (A) gegenüber sich selbst und gegenüber der anderen Seite der Peel-Folie ist dabei so groß, dass sie beim Wickeln verblockt und nicht mehr weiterverarbeitet werden kann. Der Wickel verklebt, was mit häufigen Folienabrissen, insbesondere beim Abwickeln, der Folie verbunden ist. Ist andererseits die Glasübergangstemperatur größer als 30 °C, so ist eine Siegelung und insbesondere das gewünschte Peelen der Deckschicht (A) bei den erfindungsgemäßen niedrigen Temperaturen (Mindestsiegeltemperatur 110 °C) nicht mehr gegeben. Außerdem neigt die Folie beim Abziehen von der Menüschale vermehrt zum Einreißen oder zum Abreißen, was unerwünscht ist. Die erfindungsgemäßen Siegeltemperaturen und Glasübergangstemperaturen werden durch das Einhalten der erfindungsgemäßen Zusammensetzung des Peel-Polyesters (siehe oben) erreicht.

Erfindungsgemäß liegt der SV-Wert des Peel-Polyesters der heißsiegelbaren und peelfähigen Deckschicht (A) zwischen 200 und 2000. Bevorzugt liegt der SV-Wert zwischen 250 und 1900 und besonders bevorzugt zwischen 300 und 1900. Beträgt der SV-Wert weniger als 200, so kann die geforderte Siegelnahtfestigkeit der Deckschicht (A) von mehr als 3 bis 7 N/15mm im erfindungsgemäßen Temperaturbereich gegen APET-und RPET-Menüschalen nicht mehr eingehalten werden. Die Peelkraft ist zu schwach. Ist andererseits der SV-Wert größer als 2000, so ist der Polyester zu viskos und kann z.B. nicht vernünftig in Lösung gebracht oder im Lösungsmittel dispergiert werden. Die Ermittlung des SV-Werts muss dabei analog zu dem im Methodenteil vorgestellten Verfahren erfolgen.

Des Weiteren liegt die Masse der trockenen Deckschicht (A) der erfindungsgemäßen Folie im Bereich von 1 bis 5 g/m$^2$, bevorzugt im Bereich von 1,1 bis 4,8 g/m$^2$ und besonders bevorzugt im Bereich von 1,2 bis 4,6 g/m$^2$. Beträgt das Antragsgewicht der Deckschicht (A) mehr als 5 g/m$^2$, so wächst die Peelkraft deutlich an und liegt nicht mehr im erfindungsgemäßen Bereich. Darüber hinaus wird das Peelverhalten der Folie beeinträchtigt, die Folie reißt beim Abziehen von der Menüschale vermehrt ein. Beträgt die Dicke der Deckschicht (A) dagegen weniger 1 g/m$^2$, so ist die Folie im erfindungsgemäßen Temperaturbereich nicht mehr heißsiegelbar und peelfähig.

**Antiblockmittel in der Siegelschicht (A)**

Zur Verbesserung der Handhabung der Folie, der Verarbeitbarkeit der Folie (Wicklung der Folie auf die/von der Rolle) auf den jeweiligen Maschinen (Bedruckung- und Siegelung), insbesondere aber auch zur Verbesserung des Abziehverhaltens der Folie von der Menüschale ist es von Vorteil, die heißsiegelbare und peelfähige Deckschicht (A) weiter zu modifizieren.

Dies geschieht mit Hilfe von geeigneten Antiblockmitteln, die der Siegelschicht zugegeben werden und zwar in Mengen, so dass ein Verblocken der Folie insbesondere auf der Rolle verhindert wird, sich das Abziehverhalten der Folie von der Menüschale verbessert und insgesamt das Verarbeitungsverhalten der Folie weiter optimiert wird.

Es hat sich als günstig erwiesen, wenn die Deckschicht (A) Partikel in einer bestimmten Größe, in einer bestimmten Konzentration und gegebenenfalls in einer bestimmten Korngrößenverteilung beinhaltet. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Antiblockmittel (auch als "Pigmente" oder "Partikel" bezeichnet) sind anorganische und/oder organische Partikel, wie beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der in der Deckschicht A eingesetzten abgeleiteten Dicarbonsäuren, Ruß, Titandioxid, Kaolin oder vernetzte Polystyrol- oder vernetzte Polymer-Partikel auf Basis von Acrylsäurederivaten.

Die Partikel können der Deckschicht (A) in den jeweils vorteilhaften Konzentrationen, z.B. als glykolische Dispersion während der Herstellung des Peel-Polyesters (d.h. während der Polykondensation des Peel-Polyesters) oder bei der Lackherstellung (nach der Polykondensation) dem lösemittelbasierten Präkursorsystem der Deckschicht A zugesetzt werden.

Erfindungsgemäß bevorzugte Partikel sind synthetisch hergestellte, amorphe SiO$_2$-Partikel in kolloidaler Form. Diese Partikel werden hervorragend in die Polymermatrix eingebunden und erzeugen nur wenige Vakuolen (Hohlräume). Vakuolen können z.B. beim Trocknen des Lackes entstehen, sie bewirken im Allgemeinen eine Erhöhung der Trübung und sind daher für die vorliegende Erfindung wenig geeignet. Zur Herstellung der SiO$_2$-Partikel wird auf den Stand der Technik verwiesen; das Verfahren ist z.B. in der EP 1 475 228 B1 ausführlich offenbart.

Erfindungsgemäß werden Teilchen mit einem mittleren Partikeldurchmesser d$_{50}$ von 2,0 bis 8 μm, bevorzugt von 2,5 bis 7 μm und besonders bevorzugt von 3,0 bis 6 μm verwendet. Bei der Verwendung von Teilchen mit einem Durchmesser, der unterhalb 2,0 μm liegt, ist ein positiver Einfluss der Partikel z.B. auf die Wicklung der Folie auf die/von der Rolle und das Abziehverhalten der Folie von der Menüschale nicht gegeben. In diesem Fall neigt die Folie z.B. beim Abwickeln wiederum zum Ein- oder Weiterreißen, was unerwünscht ist. Teilchen mit einem Durchmesser größer als 8 μm verursachen in der Regel Probleme bei der Verarbeitung und Aufbringung des Lackes (verstopfte Filter).

In einer bevorzugten Ausführungsform ist in der heißsiegelbaren und peelfähigen Deckschicht (A) der Durchmesser (d$_{50}$) der Partikel größer als die Dicke dieser Schicht. Es hat sich als günstig erwiesen, ein Durchmesser/Schichtdicken-Verhältnis von mindestens 1,2, bevorzugt mindestens 1,3 und besonders bevorzugt mindestens 1,4 zu wählen. In diesen Fällen ist ein besonders positiver Einfluss der Partikel insbesondere auf das Abwickelverhalten der Folie gegeben.

Zur Bereitstellung der gewünschten Peeleigenschaften und der gewünschten guten Wickelung muss die heißsiegelbare und peelfähige Deckschicht (A) Partikel in einer Konzentration von 0,1 bis 10 Gew.-% enthalten.

Bevorzugt beträgt die Konzentration der Partikel 0,5 bis 8,0 Gew.-% und besonders bevorzugt 1,0 bis 6,0 Gew.-%. Enthält die Deckschicht (A) der Folie dagegen Partikel in einer Konzentration von weniger als 0,1 Gew.-%, so ist ein positiver Einfluss auf die Wicklung der Folie nicht mehr gegeben. Enthält dagegen die Deckschicht (A) der Folie Partikel in einer Konzentration von mehr als 10 Gew.-%, so wird die Trübung der Folie zu groß.

Weiterhin hat es sich als vorteilhaft erwiesen, den arithmetischen Mittelwert der absoluten Ordinatenwerte t der heißsiegelbaren und peelfähigen Deckschicht (A) durch entsprechenden Einsatz der zuvor genannten Partikel so einzustellen, dass ihr $S_a$ Wert größer als 60 nm ist. Bevorzugt ist ein $S_a$ - Wert von größer als 80 nm und besonders bevorzugt von größer als 100 nm.

Zur Erzielung der gewünschten niedrigen Trübung, der hohen Clarity, Glanz und Transparenz der Peelfolie, die auch während der Lagerung der fertig gesiegelten Packung z.B. im Supermarkt bis zum Verbrauch aufrechterhalten werden soll, ist es besonders vorteilhaft, wenn die Deckschicht (A) gute Antifogeigenschaften aufweist. Die Deckschicht (A) enthält dazu geeignete Antifogmittel in der gewünschten Konzentration. Geeignete Antifogmittel sind z.B. Tenside, worunter man Moleküle versteht, die aus einem hydrophoben und einem hydrophilen Teil bestehen, sie sind amphiphil. Die Tenside können dabei nichtionischer, kationischer, anionischer oder zwitterionischer Natur sein. Weiterhin sind polymere Tenside oder Schutzkolloide als Antifogmittel einsetzbar.

Geeignet sind besonders anionische Tenside, die bevorzugt aus der Gruppe der Alkylsulfate, Alkylbenzolsulfate, Alkylethersulfate oder Sulfobernsteinsäureester ausgewählt werden. Ganz besonders bevorzugt sind Tenside, die aus der Gruppe der Sulfobernsteinsäureester (Natriumdioctylsulfosuccinat) ausgewählt sind, z.B. Diethylhexylsulfosuccinat Natriumsalz, Laurylsulfat Natriumsalz.

Das Antifogmittel wird in einer Konzentration von 0,01-5 Gew.-%, bevorzugt von 0,03-4,0 Gew.-% in der Deckschicht (A) verwendet, wobei sich die Höhe der Konzentration des Tensids insbesondere nach den gewünschten Antifogeigenschaften richtet. Gute Antifog-/Antibeschlag-Eigenschaften der Oberfläche von Deckschicht (A) werden erzielt, wenn eine Bildung feiner Tröpfchen auf der Oberfläche nicht beobachtet wird und gleichzeitig die Abwaschbeständigkeit der Beschichtung gut ist.

Eine Mindestvoraussetzung für gute Antibeschlag-Eigenschaften ist eine hohe Oberflächenspannung, respektive ein niedriger Kontaktwinkel der Oberfläche von Deckschicht (A). Die Antibeschlag-Eigenschaften sind ausreichend gut, wenn die Oberflächenspannung der Deckschicht (A) mindestens 55mN/m, bevorzugt mindestens 58mN/m und besonders bevorzugt mindestens 61mN/m beträgt.

Beim offline-Beschichtungsverfahren wird die Deckschicht (A) in Form einer flüssigen Beschichtungszusammensetzug, d.h. als Lack auf die Basisschicht (B) aufgebracht. Zur Herstellung des Lacks hat es sich als vorteilhaft erwiesen, die "Feststoff-Komponenten" wie das/die Peel-Polymer/e sowie der Gehalt an weiteren Substanzen wie z.B. die Antiblockmittel und/oder Antifogmittel in einem organischen Lösemittel zu lösen. Dabei können die Beschichtungskomponenten jeweils einzeln gelöst bzw. dispergiert und anschließend die jeweiligen Lösungen bzw. Dispersionen mit einander gemischt, oder auf einmal vorgelegt und anschließend im Lösemittel gelöst/dispergiert werden. In einer bevorzugten Ausführungsform wird ein Lösemittelgemisch aus Ethylacetat (EA) und Methylethylketon (MEK) als kontinuierliche Phase bei der Herstellung des Lacks eingesetzt. Dabei beträgt der MEK-Anteil bis zu 50 Gew.-%, bevorzugt bis zu 40 Gew.-% und besonders bevorzugt bis 30 Gew.-% bezogen auf die Gesamtmasse des Lösemittelgemischs. In einer besonders bevorzugten Ausführungsform wird ausschließlich EA als kontinuierliche Phase vorgelegt.

Bei Verwendung der zuvor genannten Lösemittel wird das Erreichen lebensmittelrechtlicher Kriterien und Grenzwerte besonders erleichtert, wodurch der erfindungsgemäße Einsatz der mit dem Lack beschichteten Folien in Lebensmittelverpackungen erleichtert wird. Außerdem sinken durch den Einsatz von EA die Lösemittel-basierten Herstellungs- und Entsorgungskosten, wodurch eine besonders wirtschaftliche Herstellung der erfindungsgemäßen Folie ermöglicht wird.

Der "Feststoffgehalt" des Lackes, bzw. der Gehalt an Substanzen im Lack, die nicht das Lösemittel darstellen, beträgt mindestens 20 Gew.-%, bevorzugt mindestens 23 Gew.-% und idealerweise mindestens 25 Gew.-%. Die Höchstgrenzen werden durch die Verfahrensbedingungen festgelegt und finden ihre Obergrenze in der Verarbeitbarkeit des Lackes. Bei einem Feststoffgehalt von unter 20 Gew.-% kann der Lack nicht flächig auf die Folie aufgetragen werden und es bilden sich teilweise unbeschichtete Folienabschnitte und Trocknungsphänomene (Coffee-Stain-Effect).

Um eine gute Benetzung der Polyesterfolie mit der Lösung und eine gute Haftung des Peelpolyesters an der biaxial orientierten Polyesterfolie zu erreichen, ist es von Vorteil, die Oberfläche vor der Beschichtung zunächst Corona vorzubehandeln.

**Antiblockmittel in Basisschicht (B)**

Um das Verarbeitungsverhalten der Folie nach der vorliegenden Erfindung weiterhin zu verbessern, ist es von Vorteil, in die Basisschicht (B) (d.h. die biaxial orientierte Polyesterfolie) ebenfalls Partikel einzuarbeiten. Dabei hat es sich als günstig erwiesen, die folgenden Bedingungen einzuhalten:

a) Die Partikel sollten einen mittleren Partikeldurchmesser $d_{50}$ von 1,5 bis 6 $\mu$m aufweisen. Dabei hat es sich als besonders zweckmäßig erwiesen, Teilchen mit einem mittleren Partikeldurchmesser $d_{50}$ von 2,0 bis 5 $\mu$m und besonders bevorzugt von 2,5 bis 4 $\mu$m zu verwenden.

b) Die Partikel sollten in einer Konzentration von 1x10$^{-5}$ bis 5 Gew.-% vorhanden sein. Bevorzugt beträgt die Konzentration der Partikel 1,1x10$^{-5}$ bis 4 Gew.-% und besonders bevorzugt 1,2x10$^{-5}$ bis 3 Gew.-%.

Die Basisschicht (B), d.h. die biaxial orientierte Polyesterfolie der erfindungsgemäßen Peelfolie kann dabei selbst einschichtig oder mehrschichtig aufgebaut sein. Zur Erzielung der vorgenannten Eigenschaften, insbesondere der geforderten sehr guten optischen Eigenschaften der Peelfolie hat sich ein dreischichtiger Aufbau der biaxial orientierten Polyesterfolie (B) mit einem Aufbau B'B"B' (oder B'B"B"') als besonders vorteilhaft erwiesen. Die Menge an Partikeln in der coextrudierten Basisschicht B" einer solchen dreischichtigen Folie sollte dabei niedriger eingestellt werden, als in den beiden coextrudierten Deckschichten B' (oder B' und B"'), die vorzugsweise vom Aufbau gleichgehalten werden oder aber auch verschieden sein können (B' und B"').

Bei der dreischichtigen biaxial orientierten Polyesterfolie vom genannten Typ (B'B"B') oder (B'B"B"') soll zweckmäßiger Weise in der Basisschicht (B") die Menge der Partikel zwischen 0 und 2,0 Gew.-% liegen, vorzugsweise zwischen 0 und 1,5 Gew.-%, insbesondere zwischen 0 und 1,0 Gew.-%. Als besonders zweckmäßig hat es sich erwiesen, in die Basisschicht nur Partikel einzuarbeiten, wie sie über das arteigene Regenerat (Rezyklat) in die Folie gelangen. Die optischen Eigenschaften der Folie, insbesondere die Trübung der Folie, sind dann besonders gut.

Die Dicke der beiden Deckschichten B' (oder B' und B"') kann gleich oder verschieden sein; ihre Dicke liegt im Allgemeinen jeweils zwischen 0,5 und 5 $\mu$m.

Für die Verarbeitung der Polymere, insbesondere aber für die Erzielung der gewünschten sehr guten optischen Eigenschaften der Peelfolie hat es sich als günstig erwiesen, die Polymere für die Basisschicht (B") und die der anderen Schichten (B' und/oder B"') der biaxial orientierten Polyesterfolie so zu wählen, dass sich die Viskositäten der jeweiligen Polymerschmelzen nicht zu sehr unterscheiden. Ist dies nicht der Fall, ist mit zusätzlichen Erhebungen/Vorsprüngen, mit Fließstörungen oder mit Streifenbildung auf der fertigen Folie zu rechnen. Für die Beschreibung der Viskositätsbereiche der beiden Schmelzen wird eine modifizierte Lösungsmittelviskosität (SV-Wert oder "solution viscosity") verwendet.

Für handelsübliche Polyethylenterephthalate, die sich zur Herstellung von biaxial orientierten Polyesterfolien eignen, liegen die SV-Werte im Bereich von 600 bis 1000. Um eine einwandfreie Qualität der Folie im Sinne der vorliegenden Erfindung zu gewährleisten, sollte der SV-Wert der Polymeren für die Schichten B' (oder B' und B"') im Bereich von 500 bis 1200, bevorzugt im Bereich von 550 bis 1150, insbesondere bevorzugt im Bereich von 600 bis 1000 liegen. Es gilt, dass sich die SV-Werte der Polymerschmelzen für die coextrudierte Basis- und die anderen coextrudierten Schichten um nicht mehr als 200, vorzugsweise nicht mehr als 150, insbesondere aber nicht mehr als 100 Einheiten unterscheiden sollten. In allen genannten Fällen ist es weiterhin für die vorliegende Erfindung sehr günstig, wenn die Viskositäten der beiden Schichten (B' und/oder B"') kleiner sind als die Viskosität der Basisschicht (B").

Die biaxial orientierte Polyesterfolie (= Basisschicht (B)) kann zusätzlich übliche Additive, wie Stabilisatoren (UV, Hydrolyse), flammhemmende Stoffe oder Füller, enthalten. Sie werden zweckmäßig dem Polymer bzw. der Polymermischung bereits vor dem Aufschmelzen im Extruder zugesetzt.

Die Gesamtdicke der erfindungsgemäßen Peelfolie kann innerhalb bestimmter Grenzen variieren. Sie beträgt 3 bis 200 $\mu$m, insbesondere 4 bis 150 $\mu$m, vorzugsweise 5 bis 100 $\mu$m, wobei die Schicht (B) einen Anteil von vorzugsweise 45 bis 97 % an der Gesamtdicke hat.

## Verfahren

## Biaxial orientierte Polyesterfolie

Gegenstand der vorliegenden Erfindung sind desweiteren Verfahren zur Herstellung der siegelbaren und peelfähige Peelfolie beinhaltend zunächst die Herstellung der transparenten biaxial orientierten Polyesterfolie (= Basisschicht (B) oder (B'B"B') oder (B'B"B"')) und der Herstellung der darauf offline als Beschichtung aufgebrachten Deckschicht (A).

Die transparente, biaxial orientierte Polyesterfolie = Basisschicht (B) oder Basisschicht mit dem Schichtaufbau (B'B"B' oder B'B"B"') wird nach dem üblichen Verfahren (z.B. dem Coextrusions-Verfahren) hergestellt. Erfindungsgemäß bevorzugt ist die Herstellung einer Polyesterfolie mit dem Schichtaufbau (B'B"B' oder B'B"B"'), mit der besonders gut eine Folie mit hohem Glanz und einer niedrigen Trübung hergestellt werden kann. Bei diesem bevorzugten dreischichtigen Folienaufbau mit einer Basisschicht (B") und den beiden Deckschichten (B') bzw. den Deckschichten (B' und B"') ist in der Basisschicht (B") die Partikelkonzentration vorzugsweise niedriger als die in den beiden Deckschichten (B'), bzw. in den Deckschichten (B' und B'''). Die Partikelkonzentration in der Basisschicht (B'') sollte so gewählt werden, dass sie sich positiv auf die Trübung und den Glanz der Folie auswirkt. Bei einer dreischichtigen Folie vom genannten Typ wird in der Basisschicht (B'') die Partikelkonzentration zwischen 0 und 0,06 Gew.-%, vorzugsweise zwischen 0 und 0,03 Gew.-% und insbesondere zwischen 0 und 0,01 Gew.-% liegen. Der Partikeldurchmesser der eingesetzten Teilchen ist prinzipiell nicht eingeschränkt, jedoch sind Teilchen mit einem mittleren Durchmesser ($d_{50}$) von größer 1 $\mu$m besonders bevorzugt. Die Konzentration der Partikel in den Deckschichten liegt zwischen 0,01 und 0,2 Gew.-%, bevorzugt zwischen 0,02 und 0,16 Gew.-% und besondere bevorzugt zwischen 0,030 und 0,12 Gew.-% und richtet sich im Wesentlichen nach der Größe der eingesetzten Partikeln.

Bei dem Coextrusions-Verfahren werden z.B. nach der Extrusion der jeweiligen Schmelzen in getrennten Extrudern diese in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Aus verfahrenstechnischer Sicht (Durchmischung der verschiedenen Komponenten) hat es sich dabei als besonders günstig erwiesen, wenn die Extrusion der Polymere zumindest für die Deckschichten (B'), bzw. für die Deckschichten (B' und B''') mit einem Zweischneckenextruder mit Entgasungsmöglichkeit(en) durchgeführt wird. Es wird hierdurch eine Folie hergestellt, die optisch einwandfrei ist, z.B. keine Wolkenstruktur oder keine Streifen aufweist. Eine solche Folie lässt sich besonders gut weiterverarbeiten, insbesondere sehr gut bedrucken.

Die biaxiale Streckung der Folie wird im Allgemeinen sequentiell durchgeführt. Bei der sequenziellen Streckung wird vorzugsweise erst in Längsrichtung und anschließend in Querrichtung gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von 60 bis 130 °C (Aufheiztemperaturen 60 bis 130 °C), und in Querrichtung (transverse direction orientation = TDO) in einem Temperaturbereich von 90 °C (Beginn der Streckung) bis 140°C (Ende der Streckung) durchgeführt. Das Längsstreckverhältnis liegt im Bereich von 2,0:1 bis 5,5:1, bevorzugt von 2,3:1 bis 5,0:1. Das Querstreckverhältnis liegt allgemein im Bereich von 2,4:1 bis 5,0:1, bevorzugt von 2,6:1 bis 4,5:1.

Vor der Querstreckung kann man eine oder beide Oberfläche(n) der Folie nach den an sich bekannten Verfahren inline beschichten. Die inline-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Vorzugsweise werden solche Schichten dann auf die Oberfläche der biaxial orientierten Folie aufgetragen, die nicht mit dem siegelfähigen und peelbarem Polyester beschichtet wird. Auf die Oberfläche der Folie, die offline mit der Peel-Beschichtungszusammensetzung beschichtet wird, kann gegebenenfalls nach obigem Verfahren inline, z.B. zur verbesserten Haftung zur Deckschicht (A), beschichtet werden.

Erfindungsgemäß kann zum Beispiel die Folie auf der nicht offline zu beschichtenden Oberfläche mit einer funktionalen Beschichtung beschichtet werden, so dass die funktionale Beschichtung auf der fertigen Folie eine Dicke von 5 bis 200 nm, bevorzugt 20 bis 150 nm, insbesondere 30 bis 80 nm aufweist. Besonders bevorzugt ist die Aufbringung mittels des "Reverse gravure-roll coating" Verfahrens, bei dem sich die Beschichtungen äußerst homogen in Schichtdicken bis 200 nm auftragen lassen. Ebenfalls bevorzugt ist die Auftragung durch das Meyer-Rod-Verfahren, mit dem sich größere Beschichtungsstärken erzielen lassen.

Die Beschichtungen werden bevorzugt als Lösungen, Suspensionen oder Dispersionen aufgetragen, besonders bevorzugt als wässrige Lösung, Suspension oder Dispersion. Die Beschichtungen verleihen der Folienoberfläche eine zusätzliche Funktion; beispielsweise wird die Folie dadurch bedruckbar, metallisierbar, sterilisierbar, antistatisch oder verbessern z.B. die Aromabarriere oder ermöglichen die Haftung zu Materialien, die ansonsten nicht auf der Folienoberfläche haften würden.

Beispiele für Stoffe/Zusammensetzungen, die zusätzliche Funktionalität verleihen, sind: Acrylate, wie sie beispielsweise beschrieben sind in der WO94/13476, Ethylvinylalkohole, PVDC, Wasserglas ($Na_2SiO_3$), hydrophilische Polyester (5-Nasulfoisophthalsäurehaltiger PET/IPA Polyester, wie sie bspw. beschrieben sind in der EP-A-0144878, US-A-4252885 oder EP-A-0296620), Polyvinylacetate, wie sie bspw. beschrieben sind in der WO94/13481, Polyurethane, Alkali- oder Erdalkalisalze von $C_{10}$-$C_{18}$-Fettsäuren, Butadiencopolymere mit Acrylnitril oder Methylmethacrylat, Mathacrylsäure oder deren Ester.

Die genannten Stoffe/Zusammensetzungen werden als verdünnte Lösung, Emulsion oder Dispersion, vorzugsweise als wässrige Lösung, Emulsion oder Dispersion auf eine oder beide Folienoberflächen aufgebracht und anschließend das Lösungsmittel verflüchtigt. Werden die Beschichtungen Inline vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann Schichtdicken im Allgemeinen von 5 bis 200 nm, bevorzugt 10 bis 150 nm, insbesondere 30 bis 100 nm.

In einer bevorzugten Ausführungsform der Erfindung wird eine Copolyesterbeschichtung zur Erzielung der besseren Haftung verwendet. Die bevorzugten Beschichtungscopolyester werden durch Polykondensation von (alpha) Isophthalsäure, (beta) einer aliphatischen Dicarbonsäure mit der Formel

$$HOOC(CH_2)_nCOOH,$$

wobei n im Bereich von 1 bis 11 liegt, (gamma) einem Sulfomonomeren enthaltend eine Alkalimetallsulfonatgruppe an dem aromatischen Teil einer aromatischen Dicarbonsäure und (delta) wenigstens einem aliphatischen oder cycloaliphatischen Alkylenglykol mit etwa 2 bis 11, bevorzugt 2 bis 8, besonders bevorzugt 2 bis 6 Kohlenstoffatomen hergestellt. Die insgesamt anwesenden Säureäquivalente sollen auf molarer Basis im Wesentlichen den insgesamt anwesenden Glykoläquivalenten entsprechen.

Es hat sich gezeigt, dass die verhältnismäßigen Anteile der Komponenten alpha, beta gamma und delta, die zur Herstellung der bevorzugten Copolyesterbeschichtungen eingesetzt werden, entscheidend für das Erzielen einer beschichteten Folie mit zufriedenstellender Haftung sind. So sollte bevorzugt z. B. Isophthalsäure (Komponente alpha) zu mindestens etwa 65 Mol-% als Säurekomponente anwesend sein. Bevorzugt ist die Komponente alpha reine Isophthalsäure, die in einer Menge von etwa 70 bis 95 Mol-% anwesend ist. Für die Komponente beta gilt, dass jede Säure mit der genannten Formel zufriedenstellende Ergebnisse bringt, wobei Adipinsäure, Azelainsäure, Sebazinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten des Copolyesters, wenn die Komponente beta in der Zusammensetzung enthalten ist. Das die Komponente gamma der bevorzugten Copolyesterbeschichtung bildende Monomere sollte bevorzugt in einer Menge von wenigstens 5 Mol-% in diesem System enthalten sein, damit die Zusammensetzung mit Wasser dispergierbar wird. Besonders bevorzugt liegt die Menge an Monomerem der Komponente gamma bei etwa 6,5 bis 12 Mol-%. Die Glykolkomponente (delta) ist in ungefähr stöchiometrischer Menge anwesend.

Die genannte Beschichtung kann, wie zuvor beschrieben, auf die Oberfläche der Folie aufgebracht werden, die nicht offline weiter beschichtet wird. Sie kann daneben aber auch gegebenenfalls auf die Oberfläche aufgebracht werden, die offline mit der Peel-Beschichtungszusammensetzung beschichtet wird. Sie trägt dann zur verbesserten Haftung zur Deckschicht (A) bei.

In einer weiteren bevorzugten Ausführungsform der Erfindung wird eine Acrylatbeschichtung zur Erzielung der besseren Haftung verwendet. Die bevorzugt verwendeten Acrylcopolymeren bestehen im Wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, gegebenenfalls ohne Zusatz eines gesonderten harzförmigen Vernetzungsmittels, zur Ausbildung von intermolekularen Vernetzungen befähigt ist.

Die acrylische Komponente der Haftvermittlercopolymere ist vorzugsweise in einer Menge von 50 bis 99 Gew.-% anwesend und besteht bevorzugt aus einem Ester der Methacrylsäure, insbesondere einem Alkylester, dessen Alkylgruppe bis zu zehn C-Atome enthält, wie z. B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C1 bis C4) abgeleitet sind, insbesondere Ethylacrylat, ergeben zusammen mit einem niederen Alkylmethacrylat eine besonders gute Haftung zwischen der Polyesterfolie und darauf aufgebrachten reprographischen Beschichtungen und Mattbeschichtungen. Ganz besonders bevorzugt werden Haftvermittlercopolymere aus einem Alkylacrylat, z. B. Ethylacrylat oder Butylacrylat, zusammen mit einem Alkylmethacrylat, z. B. Methylmethacrylat, insbesondere zu gleichen molaren Anteilen und in einer Gesamtmenge von 70 bis 95 Gew.-%, eingesetzt. Das Acrylatcomonomere solcher Acryl-/Methacryl-Kombinationen ist vorzugsweise in einem Anteil von 15 bis 65 Mol-% anwesend und das Methacrylat- Comonomere vorzugsweise in einem Anteil, der im allgemeinen um 5 bis 20 Mol-% grösser ist als der Anteil des Acrylatcomonomeren. Das Methacrylat ist vorzugsweise in einem Anteil von 35 bis 85 Mol-% in der Kombination enthalten.

Zur Erhöhung der Lösungsmittelbeständigkeit können gegebenenfalls zur Ausbildung von Vernetzungen geeignete Comonomere eingesetzt werden, wie z. B. N-Methylolacrylamid, N-Methylolmethacrylamid und die entsprechenden Ether; Epoxidmaterialien wie z. B. Glycidylacrylat, Glycidylmethacrylat und Allylglycidylether; Carboxylgruppen enthaltende Monomere wie z. B. Crotonsäure, Itaconsäure oder Acrylsäure; Anhydride wie z. B. Maleinsäureanhydrid oder Itaconsäureanhydrid; Hydroxylgruppen enthaltende Monomere wie z. B. Allylalkohol und Hydroxyethyl- oder Hydroxypropylacrylat oder -methacrylat; Amide wie z. B. Acrylamid, Methacrylamid oder Maleinsäureamid und Isocyanate wie z. B. Vinylisocyanat oder Allylisocyanat. Von den oben genannten vernetzenden Comonomeren werden N-Methylolacrylamid und N- Methylolmethacrylamid bevorzugt, und zwar in erster Linie deswegen, weil Copolymerenketten, die eines dieser Monomerer enthalten, unter der Einwirkung von erhöhten Temperaturen zur Kondensation miteinander und somit zur Ausbildung der gewünschten intermolekularen Vernetzungen befähigt sind. Die gegebenenfalls gewünschte Lösungsmittelbeständigkeit der bevorzugten Acrylatbeschichtung kann aber auch durch die Anwesenheit eines fremden Vernetzungsmittels wie z. B. eines Melamin- oder Harnstoff-Formaldehyd-Kondensationsproduktes erzielt werden. Wird keine Lösungsmittelbeständigkeit benötigt, so kann auf Vernetzungsmittel verzichtet werden.

Die bevorzugte Acrylat-Beschichtung kann ein- oder beidseitig auf die Folie aufgebracht werden. Es ist aber auch möglich, nur eine Seite der Folie mit der Acrylat-Beschichtung zu versehen und auf die Gegenseite eine andere Beschichtung aufzubringen. Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester zu erhöhen.

In einer weiteren bevorzugten Ausführungsform der Erfindung wird eine wasserlösliche oder hydrophile Beschichtung zur Erzielung einer besseren Haftung mit hydrophilen Schichten oder Druckfarben verwendet. Die bevorzugte hydrophile Beschichtung kann auf drei Weisen erzielt werden:

1. Eine Mischung aus einem aromatischen Copolyester (I-1) mit einer in Wasser dispergierbaren funktionellen Gruppe und einem Polyvinylalkohol (II-1),

2. Eine Mischung aus einem aromatischen Copolyester (I-2) mit einer in Wasser dispergierbaren funktionelle Gruppe und einem Polyglycerolpolyglycidylether (II-2), oder

3. Eine Mischung aus einem wässrigen Polyurethan (I-3) und einem Polyvinylalkohol (II-3).

Die aromatischen Copolyester (I-1 und I-2) werden aus aromatischen Dicarbonsäuren, wie zum Beispiel Terephthalsäure, 2,6-Naphthalindicarbonsäure oder Isophthalsäure, gegebenenfalls verzweigten oder kondensierten aliphatischen Diolen wie z. B. Ethylenglykol, Diethylenglykol, 2-Methylpropanol oder 2,2-Dimethylpropanol sowie eine esterbildende Verbindung, die eine in Wasser dispergierbare funktionelle Gruppe trägt. Beispiele für die funktionellen Gruppen sind: Hydroxyl-, Carboxyl-, Sulfonsäure- oder Phosphorsäure-Gruppen bzw. deren Salze. Bevorzugt sind Sulfonsäure- und Carbonsäure-Salze. Als Polyvinylalkohol-Komponente (II-1 und II-3) kann jeder Polyvinylalkohol verwendet werden, der wasserlöslich und mit normalen Polymerisationstechniken herstellbar ist. Generell werden solche Polyvinylalkohole durch die Verseifung von Polyvinylacetaten hergestellt. Der Verseifungsgrad sollte bevorzugt mindestens 70 %, besser jedoch 80-99,9 % betragen. Als Polyglycerolpolyglycidylether (II-2) werden Reaktionsprodukte von Glycerin und Epichlorhydrin mit Molekulargewichten zwischen ca. 250 und 1200 verwendet. Das wässrige Polyurethan (I-3) wird aus einem Polyol, wie zum Beispiel Polyester mit Glykol-Endgruppen, Polyoxyethylenglykol, Polyoxypropylenglykol, Polyoxytetramethylenglykol oder acrylische Polylole, und einem Diisocyanat, wie zum Beispiel Xyloldiisocyanat, Hexamethylendiisocyanat, 4,4'- Dicyclohexylmethandiisocyanat, Toluidindiisocyanat, Phenylendiisocyanat, 4,4'-Diphenylmethandiisocyanat und 1,5-Naphthalindiisocyanat, gebildet.

Die bevorzugten Copolyester-, Acrylat- und hydrophile Beschichtungen können weiterhin andere bekannte Zusätze enthalten, wie z. B. Antistatika, Netzmittel, Tenside, pH-Regulatoren, Antioxidantien, Farbstoffe, Pigmente, Anti-Blockmittel, wie z. B. kolloidales $SiO_2$, usw.

Bei der nachfolgenden Thermofixierung wird die Folie über eine Zeitdauer von etwa 0,1 bis 10s bei einer Temperatur von 150 bis 250 °C gehalten. Anschließend wird die Folie in üblicher Weise aufgewickelt.

**Herstellung der Deckschicht (A)**

Die endgültige Herstellung der erfindungsgemäßen heißsiegelbaren und peelfähigen Polyesterfolie erfolgt offline in einem weiteren, unabhängigen Verfahrensschritt. Hierbei wird mittels üblicher Beschichtungstechnologie die Peel-Beschichtungszusammensetzung an die Basisfolie in der gewünschten Stärke nass angetragen.

Übliche Beschichtungs- oder Antragstechnologien sind u.a. die reverse-Roll oder die reverse-Gravur Beschichtung, die forward-Gravur-Beschichtung (forward gravure), die Beschichtung mittels Meyer-Bar, die Gießwalzen-Beschichtung, die Beschichtung mittels Fließer, die Vorhangbeschichtung, die Sprühbeschichtung oder die Beschichtung mit einem Rakel (Messergießer).

Eine typische Beschichtungsanlage - auch mit Lackieranlage bezeichnet - besteht im Wesentlichen aus einer Abrollung, einer Corona-Vorbehandlungs-Station, einer oder mehreren Antragsstationen, einem Trockner und einer Aufrollung.

Die Beschichtung zur Bildung der Deckschicht (A) wird bevorzugt über eine Gravurwalze an die Polyesterfolie angetragen, die im Gleichlauf zur Bahn betrieben wird (forward gravure). Die Arbeitsbreite beträgt vorzugsweise mehr als 1000 mm und die Maschinengeschwindigkeit beträgt vorzugsweise mehr als 150m/min.

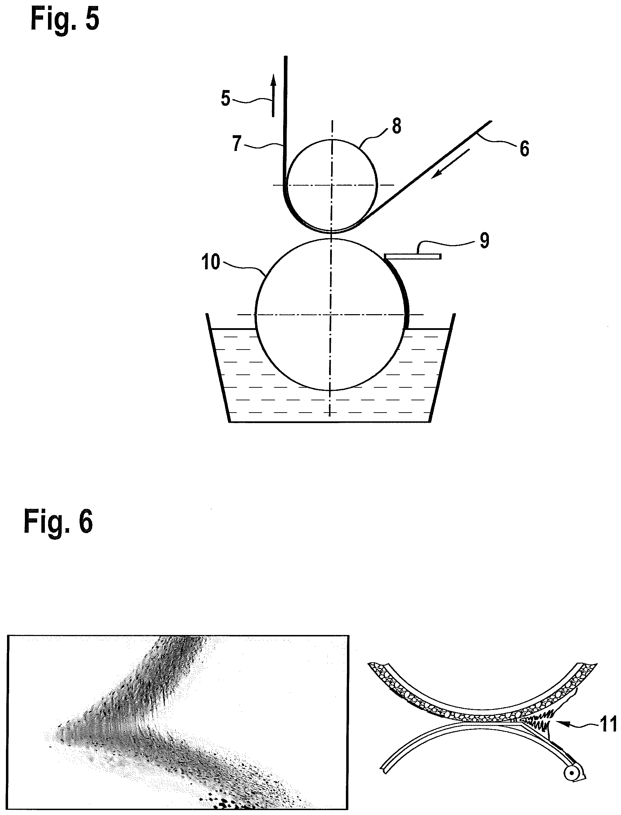

Figur 5 zeigt schematisch den Aufbau und die Arbeitsweise einer solchen Antragsstation. Die Gravurwalze (10) hat z.B. einen Durchmesser von 200 bis 600 mm mit einem Stahlkern, auf dem eine dünne metallische Schicht aufgebracht ist, in die mechanisch oder mittels Laser Näpfchen eingeprägt werden. Die Näpfchen können - je nach Aufgabenstellung - unterschiedliches Aussehen haben. Typische Näpfchengeometrien sind rund, quadratisch, haben eine Wabenstruktur, sind in sich geschlossen oder durchgängig. Das Näpfchenvolumen wird weiterhin durch die Tiefe und Größe der einzelnen Näpfchen bestimmt, welches wiederum maßgeblich Einfluss auf den Nassantrag und die Beschichtungsoptik hat. Nach Einprägung der Näpfchen wird die Gravurwalze (10) üblicherweise abschließend verchromt. Die in der Figur dargestellte Technologie wird mit "Forward Gravure" bezeichnet. Daneben kann natürlich auch die "Reverse Gravure" angewendet werden, sie wird im vorliegenden Fall aber nicht bevorzugt verwendet.

Der Antrag der Peel-Beschichtungszusammensetzung (entspricht der nassen Deckschicht (A)) an die biaxial orientierte Polyesterfolie (B) (6) erfolgt über einen Trog an die Antragswalze (10). Mit einem Rakel (9) wird üblicherweise überschüssiges Material von der Antragswalze (10) abgestreift. Von der Antragswalze wird die Peel-Beschichtungszusammensetzung an die Polyesterfolie (6), die über einen Presseur (8) geführt wird, angetragen. Anschließend wird die beschichtete Folie (7) in eine Trocknungsvorrichtung (5) weitergeführt.

Das Verfahren ähnelt damit stark der üblichen Drucktechnologie, wie sie z.B. von M. Lake, in "Oberflächentechnik in der Kunststoffverarbeitung", Hanser 2009, detailliert dargestellt wird. Im Vergleich zur Drucktechnik wird im vorliegenden Fall die Peel-Beschichtung (in der Praxis auch mit Lack bezeichnet) vollflächig und nicht wie beim Drucken, partiell aufgebracht. Zum Übertragungsmechanismus der Peel-Beschichtung von der Gravurwalze auf das Substrat (= biaxial orientierte Polyesterfolie) wird an dieser Stelle auf die Vorlesung von E. Dörsam (Technische Universität Darmstadt, Sommersemester 2012), "Printing Technology for Electronics, 4. Ink Transfer in the Printing Process", 01.06.2012, verwiesen. Die Übertragung der Peel-Beschichtung auf die Polyesterfolie erfolgt dabei im Wesentlichen durch Farbspaltung (11), wie sie anschaulich in Figur 6, E. Dörsam, 2012, dargestellt ist.

Um eine Peelfolie herzustellen, die sich durch ein hervorragendes Wickelverhalten - auch nach Lagerung - auszeichnet, wurde die beschichtete Folie direkt nach der Beschichtung - vor der Trocknung - auf der Beschichtungsseite (Deckschicht (A)) nach einem bestimmten Verfahren geglättet.

Zur Glättung der Folienoberfläche können eine Reihe von verschiedenen Techniken angewendet werden, z.B. die Glättung mittels Luftmesser, der Einsatz von Glättwalzen (ähnlich dem Kalandrieren von Folien), über die die nasse Schicht geführt wird oder die Glättung mit Hilfe sogenannter "smoothing bars".

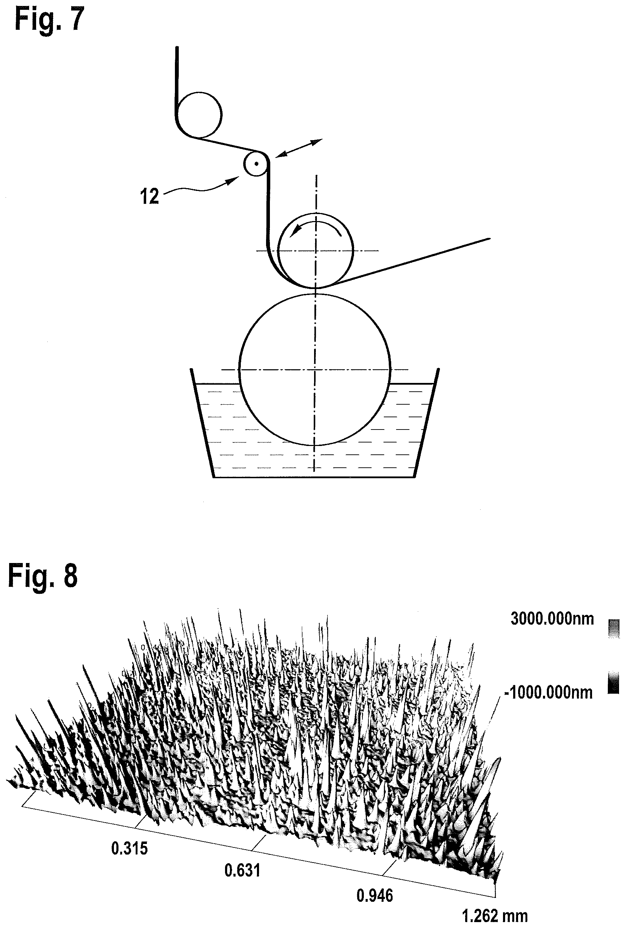

Zur Herstellung einer Folie nach der vorliegenden Erfindung mit besonders gutem Wickelverhalten wird in vorteilhafter Weise das an sich bekannte Verfahren mittels "smoothing bar" angewendet, siehe Figur 7 (12). Der "smoothing bar" besteht aus einer sich drehenden Walze mit einem Durchmesser von 2 bis 8 cm und glatter Oberfläche, die im Gleichlauf oder im Gegenlauf betrieben werden kann.

Es hat sich dabei im Sinne einer guten Wicklung weiterhin als vorteilhaft erwiesen, den "smoothing bar" im Gegenlauf (reverse) zu betreiben, wobei die Geschwindigkeit des "smoothing bar" etwa 20 bis 200 % der Folienbahngeschwindigkeit beträgt. Der Umschlingungswinkel der Folie kann dabei in gewissen Grenzen variieren und richtet sich u.a. nach der Viskosität der Peel-Beschichtungszusammensetzung. Üblich sind Umschlingungswinkel im Bereich von 0 bis 90 °, bevorzugt 0 bis 45 ° und besonders bevorzugt 0 bis 20°.

Durch die Glättung der Beschichtungsseite der Peelfolie nach der vorliegenden Erfindung, wird eine Folie erhalten, die sich insbesondere durch ein hervorragendes Wickelverhalten - auch nach Lagerung - auszeichnet. Eine solche erfindungsgemäße Folie zeichnet sich durch eine Topographie aus, wie sie beispielhaft in Figur 8 dargestellt ist.

Erfindungsgemäß zeichnen sich solche erfindungsgemäßen Folien durch einen arithmetischen Mittelwert der absoluten Ordinatenwerte $S_a$ der Deckschicht (A) aus, der kleiner ist als 300 nm, bevorzugt kleiner ist als 250 nm und besonders bevorzugt kleiner ist als 200 nm und durch eine reduzierte Spitzenhöhe $S_{pk}$, die kleiner ist als 700 nm, bevorzugt kleiner ist als 690 nm und besonders bevorzugt kleiner ist als 680 nm.

Bei der Herstellung (Coating) und bei der Weiterverarbeitung (Auf- und Abwickeln, Schneiden) der erfindungsgemäßen Peelfolie nach diesem Verfahren - mit der zuvor beschriebenen Glättung der Deckschicht (A) - dieser Folie wurde Folgendes festgestellt

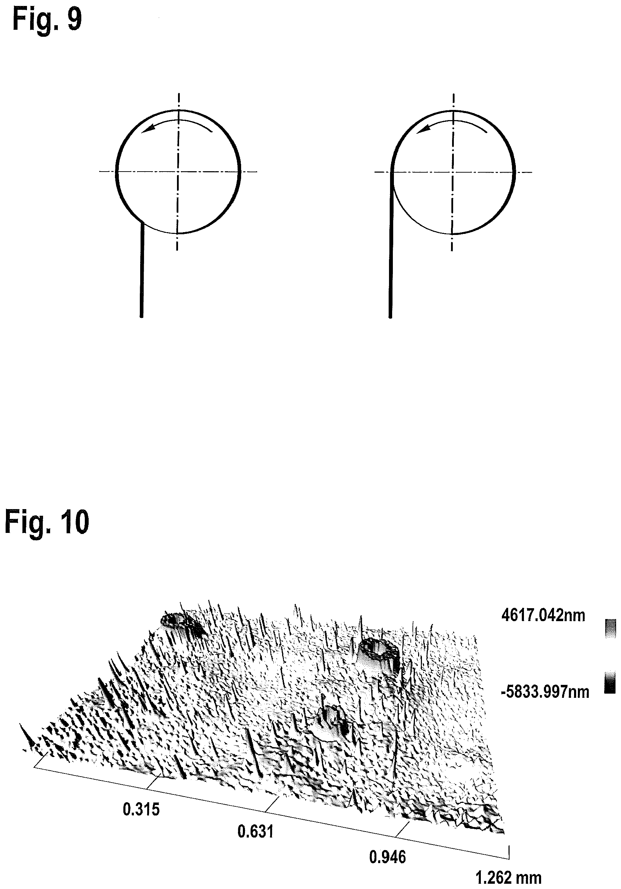

- Bei der Aufrollung der beschichteten Folie zur Masterrolle und nachfolgendem Probeabziehen der Peelfolie von der Rolle wird kein Abrollgeräusch festgestellt. Die Folie fällt beim Abwickeln tangential von der Rolle, wie in Figur 9, rechts, dargestellt.

- Bei der Weiterverarbeitung der beschichteten Folie, z.B. beim Schneiden der Masterrolle in kleine Schnittrollen für die Kundenanwendung, wurde keine Haftung der Folienlagen untereinander beobachtet, die Folie fällt weiterhin beim Abwickeln tangential von der Rolle und es wurde weiterhin kein Abrollgeräusch festgestellt.

- Das Wickelverhalten der fertigen Peelfolie ist sehr gut und entspricht voll den Erfordernissen.

- Die Trockenmasse der Beschichtung auf der beschichteten Folie bleibt vollständig auf der beschichteten Seite. Es erfolgt insbesondere kein Ausreißen der Trockenmasse ("kohäsiver Bruch") durch Übertragung auf die Rückseite innerhalb eines Wickels.

Wird andererseits die Beschichtung ohne die beschriebene, nachfolgende Glättung durchgeführt, so stellt man bei der Herstellung der Peelfolie und bei der Weiterverarbeitung dieser Folie folgende Punkte fest

- Bei der Aufrollung der beschichteten Folie zur Masterrolle und nachfolgendem Probeabziehen der Peelfolie von der Rolle wird ein deutliches Abrollgeräusch festgestellt. Die Folie fällt nicht mehr tangential von der Rolle, wie in Figur 9, rechts dargestellt, sondern es wird ein Versatz beobachtet, wie in Figur 9, linkes Bild, dargestellt. Auf der Rolle kommt es zwischen den einzelnen Folienlagen zu einer vergrößerten Haftung, die unerwünscht ist.

- Bei der Weiterverarbeitung der beschichteten Folie, z.B. beim Schneiden der Masterrolle in kleine Schnittrollen für die Kundenanwendung, wird eine weitere verstärkte Haftung der Folienlagen untereinander beobachtet, der oben beschriebene Versatz wird deutlich größer und die Folie kann - wenn überhaupt - nur mit Kraftanstrengung von der Rolle gezogen werden.

- Durch diese vergrößerte Haftung zwischen den einzelnen Folienlagen kommt es zu Folienabrissen in der Maschine, was zum Abbruch der Schneidoperation führ. Dies ist unerwünscht.

- Das Anhaften mit der Rückseite kann so stark sein, dass Teile der Lackschicht ausgerissen und übertragen werden.

- Fazit ist, dass das Wickelverhalten der Peelfolie ungenügend ist und nicht den Erfordernissen entspricht.

Eine solche - nicht erfindungsgemäße Folie - zeichnet sich durch eine Topographie der Deckschicht (A) aus, wie sie beispielshaft in Figur 10 dargestellt ist. Im Oberflächenplott der Deckschicht (A), sind neben den "üblichen Erhebungen (Protrusions)", zusätzliche Erhebungen zu sehen, die in ihrem Durchmesser um ein Vielfaches größer sind als die sie umgebenden Spitzen.

Für die Herstellung der erfindungsgemäßen Peelfolie ist es weiterhin von Bedeutung, dass bei der Beschichtung die folgenden Kriterien eingehalten werden.

- Die Temperatur der Peel-Beschichtungszusammensetzung (= Lack) befindet sich innerhalb bestimmter Grenzen. Die Temperatur des Lackes (gemessen in der Wanne und im Zulaufbehälter) beträgt 10 bis 40 °C, vorzugsweise 16 bis 28 °C und besonders bevorzugt 18 bis 25 °C. Beträgt die Temperatur des Lackes weniger als 10 °C treten in der beschichteten Folie Wolkenstrukturen auf, die unerwünscht sind. Bei einer Temperatur des Lackes von größer als 40 °C ist die beschichtete Folie fleckig, was ebenfalls unerwünscht ist.
- Die Viskosität des Lackes liegt in einem bestimmten Bereich. Die Viskosität wird mittels DIN 4-Auslaufbecher bestimmt. Erfindungsgemäß beträgt die Viskosität des Lackes (gemessen in der Wanne und im Zulaufbehälter) 10 bis 50 s, vorzugsweise 16 bis 32 s und besonders bevorzugt 17 bis 30 s. Beträgt die Viskosität des Lackes weniger als 10 s, so ist der Antrag ungleichmäßig, was sich in hohen Trübungsschwankungen über die Folienbreite und die Folienlänge bemerkbar macht. Die Schwankungen sind unerwünscht. Bei einer Viskosität des Lackes von größer als 50 s ist die beschichtete Folie in der Trübung deutlich erhöht, was ebenfalls unerwünscht ist.

**Erfindungsgemäßen Eigenschaften**

Die Peelfolie, hergestellt nach der vorliegenden Erfindung, besitzt eine Reihe von vorteilhaften, erfindungsgemäßen Eigenschaften, von denen untenstehend die wichtigsten aufgeführt sind.

Der Glanz der nicht offline beschichteten Folienoberfläche ist größer als 100, in der bevorzugten Ausführungsform größer als 110 und in der besonders bevorzugten Ausführungsform größer als 120. Die nicht beschichtete Folienoberfläche eignet sich daher insbesondere für eine weitere funktionelle Beschichtung, für die Bedruckung oder für die Metallisierung. Der Glanz der offline mit dem erfindungsgemäßen Polyester beschichteten Folienoberfläche ist größer als 70, in der bevorzugten Ausführungsform größer als 75 und in der besonders bevorzugten Ausführungsform größer als 80.

Die Clarity der erfindungsgemäßen Folie ist größer als 80 %. In einer bevorzugten Ausführungsform beträgt die Clarity der Folie mehr als 82 % und in einer besonders bevorzugten Ausführungsform mehr als 84 %. Die Trübung der erfindungsgemäßen Folie ist kleiner als 20 %. In einer bevorzugten Ausführungsform beträgt die Trübung der Folie weniger als 18 % und in einer besonders bevorzugten Ausführungsform weniger als 15 %. Die Transparenz der erfindungsgemäßen Folie ist größer als 90 %. In einer bevorzugten Ausführungsform beträgt die Transparenz der Folie mehr als 90,5 % und in einer besonders bevorzugten Ausführungsform mehr als 91 %.

Die Peeleigenschaften der Folie gemäß der vorliegenden Erfindung sind hervorragend. Die Folie zeigt gegenüber APET- und RPET -Menüschalen eine feste Peelbarkeit (medium peel). Die Peelkraft liegt im Temperaturbereich von 110 bis 160 °C im gewünschten Bereich von 3 bis 7 N/15mm. Darüber hinaus hat sich überraschender Weise gezeigt, dass die erfindungsgemäße Folie auch sehr gut gegen CPET- und ACPET- Menüschalen und Menüschalen aus Karton, die mit einer APET-Schicht überzogen sind, peelt; die Folie zeigt auch hier in allen Fällen die gewünschte feste Peelbarkeit.

Darüber hinaus besitzt die Folie ein einwandfreies "Cold-Peel-Verhalten. Sie ist darüber hinaus "Reworkable", was wirtschaftlich von hohem Vorteil ist. Darüber hinaus zeigt die Siegelnaht eine hohe Integrität, d.h., sie ist z.B. Wasser- und Olivenölresistent und besteht den sogenannten Wasser- und Olivenöltest.

Die Peelfolie nach der vorliegenden Erfindung zeichnet sich durch ein hervorragendes Wickelverhalten - auch nach Lagerung - aus. Sie besitzt eine Topographie, wie sie in Figur 8 dargestellt ist. Sie zeichnet sich erfindungsgemäß durch einen arithmetischen Mittelwert der absoluten Ordinatenwerte $S_a$ der Deckschicht (A) aus, der kleiner ist als 300 nm und durch eine reduzierte Spitzenhöhe $S_{pk}$, die kleiner ist als 700 nm.

Die Adhäsion zwischen der biaxial orientierten Polyesterfolie und der offline aufgebachten Deckschicht (A) (Intra-layer bond strength) ist so groß, dass beim Abziehen der Folie von der Menüschale der Bruch bevorzugt zwischen der PeelSchicht und der Menüschalenoberfläche stattfindet (Adhäsionsbruch). Dies verbessert natürlich insbesondere die "Reworkability" und das Aussehen der verbleibenden Menüschale.

Die erfindungsgemäße Folie eignet sich hervorragend zum Verpacken von Nahrungs- und Genussmitteln, insbesondere bei der Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst u.a. die wichtigsten erfindungsgemäßen Folieneigenschaften noch einmal zusammen.

Tabelle 1

| Deckschicht (A) | Erfindungsgemäßer, zweckmäßiger Bereich | Bevorzugt | Besonders bevorzugt | Einheit | Messmethode |
|---|---|---|---|---|---|
| Anteil Polyester | 85 bis 99 | 86 bis 99 | 87 bis 99 | Gew.-% | |
| Anteil Einheiten im Polyester, aufgebaut auf aromatischen Dicarbonsäuren | 25 bis 95 | 40 bis 90 | 50 bis 88 | Mol.-% | |
| Anteil Einheiten im Polyester, aufgebaut auf aliphatischen Dicarbonsäuren | 5 bis 75 | 10 bis 60 | 12 bis 50 | Mol.-% | |
| Anteil weitere Substanzen | 1 bis 15 | 1 bis 14 | 1 bis 13 | Gew.-% | |
| Glasübergangstemperatur Polyester | 0 bis 30 | 0 bis 27 | 2 bis 25 | °C | intern |
| SV-Wert Polyester | 200-2000 | 250-1900 | 300-1900 | | intern |
| Masse der trockenen Deckschicht (A) | 1-5 | 1,1-4,8 | 1,2-4,6 | g/m$^2$ | intern |
| Partikeldurchmesser $d_{50}$ | 2,0 bis 8 | 2,5 bis 7 | 3,0 bis 6 | $\mu$m | intern |
| Füllstoffkonzentration | 0,5 bis 10 | 0,7 bis 8,0 | 1,0 bis 6,0 | % | intern |
| Eigenschaften | | | | | |
| Dicke der Folie | 3 bis 200 | 4 bis 150 | 5 bis 100 | $\mu$m | |
| Mindestsiegeltemperatur von DS (A) gegen APET- und RPET-Menüschalen | 110 | 112 | 115 | °C | intern |
| Siegelnahtfestigkeit von DS (A) gegen APET-und RPET-Menüschalen | 3 bis 7 | 3,1 bis 7 | 3,2 bis 7 | N/15 mm | intern |
| Cold peel-Verhalten | medium peel | medium peel | medium/ strong peel | | intern |

(fortgesetzt)

| Deckschicht (A) | Erfindungsgemäßer, zweckmäßiger Bereich | Bevorzugt | Besonders bevorzugt | Einheit | Messmethode |
|---|---|---|---|---|---|
| Arithmetischer Mittelwert der absoluten Ordinatenwerte $S_a$ | < 300 | < 250 | < 200 | nm | DIN EN ISO 25178-2 |
| Reduzierte Spitzenhöhe $S_{pk}$ | < 700 | < 690 | < 680 | nm | DIN EN ISO 25178-2 |
| Glanz der nicht offline beschichteten Oberfläche | > 100 | > 110 | > 120 | | DIN 67530 |
| Glanz der offline beschichteten Oberfläche | > 70 | > 75 | > 80 | | DIN 67530 |
| Clarity der Folie | > 80 | > 82 | > 84 | % | ASTM D 1003 |
| Trübung der Folie | < 20 | < 18 | < 15 | % | ASTM D 1003-61, Methode A |
| Transparenz der Folie | > 90 | > 90,5 | > 91 | % | |
| Schrumpf der Folie | < 2,5 | < 2,2 | < 2,0 | % | DIN 40634, 150 °C, 15 min. |
| E-Modul der Folie | > 3000 | > 3500 | > 4000 | | ISO527-1 und ISO 527-3; Mustertyp 2 |

**Definitionen und Vereinbarungen**

Unter heißsiegelbar wird die Eigenschaft einer mehrschichtigen, mindestens eine Basisschicht (B) enthaltenden Polyester-Folie verstanden, die zumindest eine heißsiegelbare Deckschicht (A) enthält, die mittels Siegelbacken durch Anwendung von Wärme (110 bis 200 °C) und Druck (1 bis 6 bar) in einer bestimmten Zeit (0,1 bis 2 sec) mit einem Substrat aus thermoplastischem Kunststoff, insbesondere APET/RPET-und CPET-Menüschalen verbunden werden kann, ohne dass dabei die Trägerschicht (= Basisschicht (B)) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise Polyethylenterephthalat mit einem Schmelzpunkt von 254 °C verwendet, so beträgt der Schmelzpunkt der heißsiegelbaren Schicht im Allgemeinen deutlich weniger als 230 °C, im vorliegenden Fall bevorzugt weniger als 200 °C und besonders bevorzugt weniger als 170 °C.

Unter peelfähig wird die Eigenschaft einer Polyester-Folie verstanden, die zumindest eine heißsiegelbare und peelfähige Deckschicht (A) enthält, die nach der Heißsiegelung auf APET/RPET-und CPET-Menüschalen derart wieder von der Menüschale abgezogen werden kann, dass dabei die Folie weder ein- noch abreißt. Der Verbund aus heißsiegelfähiger Folie und Menüschale geht beim Abziehen der Folie von der Menüschale i.d.R. in der Naht zwischen der Heißsiegelschicht und der Menüschalenoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen der Menüschale heißgesiegelten Folie in einem Zug-Dehnungs-Prüfgerät unter einem Schälwinkel von 180 ° entsprechend Figur 1 wird ein Reiß-Dehnverhalten der Folie gemäß Figur 2 erhalten. Bei Beginn des Abschälens der Folie von dem Substrat steigt die dazu erforderliche Kraft gemäß Figur 2 bis zu einem bestimmten Wert (z.B. 5 N/15mm) an und bleibt dann über den gesamtem Schälweg in etwa konstant, ist allerdings mit mehr oder weniger großen Schwankungen behaftet (ca. +/- 20 %).

Unter Cold-Peel wird die Eigenschaft einer Polyester-Peelfolie verstanden, dass sie nach Lagerung im Kühlschrank bei üblichen Temperaturen (2 bis 8 °C) ihre zuvor definierte Peelfähigkeit nicht verliert. Üblicher Weise wird das Cold-Peel-Verhalten wie folgt getestet: Die heißgesiegelte Packung wird in den Kühlschrank gestellt und dort ca. 15 min aufbewahrt. Die Packung wir aus dem Kühlschrank herausgeholt und unmittelbar danach wird die Folie von der Menüschale mit der Hand abgezogen. Sie muss hierbei komplett peelen, d.h. sie darf bei diesem Vorgang weder reißen, noch einreißen, noch weitereißen. Die Höhe der Peelkraft sollte dabei "Medium peel" entsprechen.

Unter "Reworkabilty" wird die Eigenschaft einer Polyester-Peelfolie verstanden, dass sie nach Heißversiegelung direkt wieder von der Menüschale abgezogen werden kann, ohne dabei ihre Peelfähigkeit zu verlieren. Bei der Herstellung von gesiegelten Packungen ist mit Ausschuss zu rechnen, z.B. eine mit Fehlern behaftete Siegelung. Vom Inspekteur an der Linie wird die fehlerbehaftete Schale dem Band entnommen und die Peelfolie von der Menüschale abgezogen. Die Folie hat die Eigenschaft "reworkable" zu sein, wenn sie dabei komplett von der Schale abgezogen werden kann, ohne dabei einzureißen. Danach wird die Menüschale wieder - entweder mittels Handgerät versiegelt oder in die Linie zum Versiegeln gestellt. Der Vorgang geschieht bei Raumtemperatur der Maschinenhalle (4 bis 10 °C).

Integrität zu Wasser und zu Olivenöl. Die Folie zeigt die gewünschte Integrität, wenn sie den sogenannten Wasser- und Olivenöltest bestanden hat. Hierbei wird die Menüschale vor der Heißversiegelung derart mit Wasser oder Olivenöl gefüllt, dass beim senkrechten Hinstellen der versiegelten Menüschale auf die Sieglenaht eine etwa 3 cm hohe Flüssigkeitsschicht wirkt. Die Folie besteht diesen Test, wenn nach einer Lagerzeit (hochkant mit 3 cm Flüssigkeitssäule auf die Siegelschicht) von mindestens 14 Tagen keine Flüssigkeit ausgelaufen ist.

Zur Charakterisierung der Rohstoffe und der Folien wurden im Rahmen der vorliegenden Erfindung die folgenden Messmethoden benutzt:

## Siegelnahtfestigkeit (Bestimmung der Peel-Kraft)

Zur Bestimmung der Siegelnahtfestigkeit wird ein Folienstreifen (100mm lang x 15mm breit) auf die Innenseite eines entsprechenden Streifens (dieser wird aus dem Boden der Menüschale herausgeschnitten) der APET/RPET-Menüschale gelegt und bei der eingestellten Temperatur von ≥ 110 °C, einer Siegelzeit von 0,5 s und einem "Siegeldruck" von 460N (Siegelgerät HSG/ET der Firma Brugger, einseitig beheizte Siegelbacke) gesiegelt. Entsprechend Figur 2 werden nach einer Zeit von ca. 2 h die gesiegelten Streifen in die Zugprüfmaschine (z.B. Zwick) eingespannt und die 180 °-Siegelnahtfestigkeit, d.h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z.B. 3 N/15mm).

## Bestimmung der Mindestsiegeltemperatur

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 460 N und einer Siegeldauer von 0,5 s gesiegelt wird. Die 180 ° Siegelnahtfestigkeit wurde wie bei der Bestimmung der Siegelnahtfestigkeit gemessen. Die Mindestsiegeltemperatur ist die Temperatur in °C, bei der eine Siegelnahtfestigkeit von mindestens 3 N/15mm erreicht wird, wobei die Mindestsiegeltemperatur immer über 80 °C liegt.

## Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

## Die Standardviskosität SV

Die Standardviskosität in verdünnter Lösung SV wurde, angelehnt an DIN 53 728 Teil 3, in einem Ubbelohde Viskosimeter bei (25 $\pm$ 0,05) °C gemessen. Anstelle einer Mischung von Phenol und 1,2-Dichlorbenzol wurde Dichloressigsäure (DCE) als Lösemittel verwendet. Die Konzentration des gelösten Polymers betrug 1 g Polymer / 100 ml reines Lösemittel. Die Auflösung des Polymers erfolgte 1 Stunde bei 60 °C. Wurden die Proben nach dieser Zeit nicht vollständig gelöst, wurden noch bis zwei Auflösungsversuche jeweils 40 min bei 80 °C durchgeführt und die Lösungen anschließend 1 Stunde bei einer Drehzahl von 4100 min-1 zentrifugiert.

Aus der relativen Viskosität ($\eta$rel = $\eta$ /$\eta$s) wird der dimensionslose SV-Wert wie folgt ermittelt:

$$SV = (\eta rel - 1) \times 1000$$

Der Anteil an Partikeln in der Folie bzw. Polymerrohstoff wurde mittels Aschebestimmung ermittelt und durch entsprechende Mehreinwaage korrigiert. D.h.:

Einwaage = (Einwaage entsprechend 100 % Polymer) / [(100-Partikelgehalt in Gew.-%)/100)]

**Trübung, Clarity und Transparenz**

Die Messung an den beschichteten Polyesterfolien erfolgt am Hazegard Hazemeter XL-211 der Fa. BYK Gardner. Die Trübung nach Hölz wurde nach ASTM-D 1003-61, Methode 1, bestimmt. Die Messung der Clarity geschieht nach ASTM-D 1003 mittels Hazeguard, jedoch jetzt am "clarity port" des Messgerätes. Die Messung der Transparenz geschieht nach ASTM-D 1033-77.

**Glanz 20°**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**E-Modul**

Der E-Modul wird gemäß ISO 527-1 und ISO 527-3, Muster 2 Typ, Testgeschwindigkeit 100 %/min, 23 °C, 50 % r.h. bestimmt

**Schrumpf**

Der Schrumpf der Folie wird nach DIN 40634 bei einer Temperatur von 150 °C und einer Schrumpfdauer von 15 min gemessen.

**Antifogeigenschaften**

Zur Bestimmung der Antifogeigenschaften wird 1 Tag nach Herstellung der Peelfolie zunächst die Oberflächenspannung der Siegelseite (A) in mN/m gemessen. Dies geschieht mit dem Krüss-Gerät DS 100 nach vorliegender Betriebsanleitung.

**Bestimmung der Antibeschlag-Wirkung**

Die Antibeschlag-Eigenschaften der Polyesterfolien wurden wie folgt bestimmt:
In einem auf 23 °C und 50 % relative Luftfeuchtigkeit temperierten Labor wurden Folienmuster auf eine Menüschale (Länge ca. 17 cm, Breite ca. 12 cm, Höhe ca. 3 cm) aus amorphem Polyethylenterephthalat, die ca. 50 ml Wasser enthielt, geschweißt.
Die Schalen werden in einem auf 4 °C temperiertem Kühlschrank gelagert und nach jeweils 10, 30 min, 4, 8 und 24 h zur Beurteilung entnommen. Die Kondensatbildung beim Abkühlen der 23 °C warmen Luft auf Kühlschranktemperatur wurde geprüft. Eine mit einem wirksamen Antibeschlag-Mittel ausgerüstete Folie ist auch nach der Kondensatbildung transparent, da das Kondensat beispielsweise einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.
Eine weitere Untersuchungsmethode ist der so genannte Heiß-Dampf- oder Hot-Fog-Test. Dazu wird ein 250 ml Becherglas, das 50 ml Wasser enthält und mit der zu prüfenden Folie bespannt ist, in ein auf 70 °C temperiertes Wasserbad gestellt. Die Beurteilung ist die gleiche wie oben beschrieben. Zusätzlich kann man mit diesem Test die Langzeit-Antibeschlag-Wirkung bzw. die Abwaschbeständigkeit der Folie prüfen, da der Dampf ständig an der Folie kondensiert und wieder abläuft oder abtropft. Leichtlösliche Substanzen werden so abgewaschen und die Antibeschlag-Wirkung lässt nach.

**Messung des mittleren Durchmessers $d_{50}$**

Die Bestimmung des mittleren Durchmessers $d_{50}$ wird mittels Malvern Master Sizer 2000 am einzusetzenden Partikel durchgeführt.

Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert.

Messungen an der mittels dieser Partikel hergestellten Folie ergeben einen um 15 - 25 % niedrigeren $d_{50}$ Wert als die eingesetzten Partikel.

**Topographie (Weißlicht-Interferometrie)**

Die Topographie der Oberfläche wird mit einem Weißlicht-Interferometrie-Mikroskop der Firma Bruker, Typ Contour GT-K/A mit der Messsoftware Vision 64 Version 5.6, nach ISO 16610-19 (Welligkeitsfilterung) und ISO 25178-2 (Rauheitsparameter) bestimmt. Gemessen wird eine Fläche von 0,95 mm x 1,27 mm (480 x 640 Pixel) bei 5,1-facher optischer Vergrößerung. Die zu messende Folienoberfläche wird im Sputter Coater Polaron SC7680 mit einer Schicht von reinem Silber mit der Dicke von 10 nm senkrecht besputtert, um eine optimal reflektierende Schicht für die Messung der Oberflächentopographie zu erzeugen.

Zur Messung wird ein Folienstück von 10 x 10 cm Größe zwischen zwei Metallringe mit dem Durchmesser von 4 cm gespannt, so dass visuell keine Welligkeit der Folienprobe zu beobachten ist.

Die Messung erfolgt im VSI-Modus (vertical scanning interferometry). Alle Messparameter werden auf die mit der Software gelieferten Standardwerte gesetzt, mit folgenden Ausnahmen: Die Messlänge in z-Richtung (= Dickenrichtung der Folie) wird auf 25 $\mu$m (BackscanLength = 10 $\mu$m, ScanLength = 15 $\mu$m) festgelegt. Unter diesen Standard-messbedingungen (Vorschubgeschwindigkeit 1X, Modulation Threshold = 5 %) beträgt der Anteil der unerkannten Pixel weniger als 10 %. Fehlende Messwerte an den Flanken der Erhebungen werden rechnerisch ergänzt (Data Restore).

Sämtliche S-Parameter in der Folge werden aus der S-F Oberfläche gerechnet. $S_a$ ist der arithmetische Mit-telwert der absoluten Ordinatenwerte innerhalb des Definitionsbereiches (A):

$$S_a = \frac{1}{A} \iint\limits_A |z(x,y)| \, dx \, dy$$

Die reduzierte Spitzenhöhe $S_{pk}$ ist die mittlere Höhe der hervorstehenden Spitzen oberhalb des Kernes der Oberfläche. Die Rechenvorschriften für die Sa- und Spk-Parameter sind in der Norm ISO 25178-2 angegeben.

Die $S_a$- und $S_{pk}$-Werte für eine Probe sind Mittelwerte von 5 zufällig gewählten unterschiedlichen Messstellen. Sollte auf einer Messstelle der $S_{pk}$-Wert größer als 800 nm sein, wird die Messung auf weiteren 5 zufällig gewählten Messstellen durchgeführt und alle die Messwerte für die Probe dann in die Mittelwerte gezogen.

Im Folgenden wird die Erfindung anhand von Beispielen näher erläutert.

**Beispiel 1**

**I Herstellung der biaxial orientierten Polyesterfolie**

Es wurde nach dem üblichen Verfahren (Längs-Quer-Versteckung) eine biaxial orietierte Folie aus aus Polyethylenterephthalat mit einer Dicke von 23 $\mu$m hergestellt. Dazu wurden Chips aus Polyethylenterephthalat dem Extruder für die Basisschicht (B") zugeführt. Ebenfalls wurden Chips aus Polyethylenterephthalat und Partikel dem Extruder (Zweischneckenextruder) für die Deckschicht (B') zugeführt. Entsprechend den in untenstehender Tabelle aufgeführten Verfahrensbedingungen wurden die Rohstoffe in den beiden jeweiligen Extrudern aufgeschmolzen und homogenisiert.

Dann wurden durch Coextrusion in einer Dreischichtdüse die drei Schmelzeströme für die Schicht (B") und die beiden Deckschichten (B') übereinander geschichtet und über die Düsenlippe ausgestoßen. Der resultierende Schmelzefilm wurde abgekühlt und anschließend über eine stufenweise Orientierung in Längs- und Querrichtung eine transparente, dreischichtige Folie mit B'B"B'-Aufbau in einer Gesamtdicke von 23 $\mu$m hergestellt. Die Dicken der beiden Deckschichten (B') betragen jeweils 1 $\mu$m.

Coextrudierte Basisschicht (B"):

100 Gew.-% Polyethylenterephthalat mit einem SV-Wert von 800

Beide coextrudierte Deckschichten (B'), Mischung aus:

85 Gew.-% Polyethylenterephthalat mit einem SV-Wert von 790

15 Gew.-% Masterbatch aus 99 Gew.-% Polyethylenterephthalat (SV-Wert von 790) und 1,0 Gew.-% Sylobloc 44 H (synthetisches $SiO_2$), $d_{50}$ = 2,5 $\mu$m

Die Herstellungsbedingungen in den einzelnen Verfahrensschritten waren

| Extrusion | Temperaturen | B'-Schicht | 280 | °C |
| | | B"-Schicht | 280 | °C |
| | Temperatur der Abzugswalze | | 20 | °C |
| Längsstreckung (NTEP) | Aufheiztemperatur | | 70-120 | °C |
| | Strecktemperatur | | 115 | °C |
| | Längsstreckverhältnis (LOE = 1,7 und REP = 2,65) | | 4,5 | |
| Querstreckung | Aufheiztemperatur | | 100 | °C |
| | Strecktemperatur | | 135 | °C |
| | Querstreckverhältnis | | 4,0 | |
| Fixierung | Temperatur | | 230 | °C |
| | Dauer | | 3 | s |

**II Herstellung der beschichteten Peelfolie**

Die biaxial orientierte Polyesterfolie wurde offline mit einer Peel-Beschichtungszusammensetzung zur Bildung der Deckschicht (A) gemäß untenstehender Angaben mit einer Gravurwalze (forward gravure) beschichtet. Danach erfolgte die Glättung der Deckschicht (A) mittels "smoothing bar". Der smoothing bar wurde mit einer Geschwindigkeit betrieben, die 100 % der Folienbahngeschwindigkeit entspricht, die aber entgegengesetzt gerichtet ist. Der Umschlingungswinkel betrug dabei 2 °. Die Trockenmasse (= Deckschicht (A)) betrug 2,5 g/m$^2$.

Beschichtungszusammensetzung (vgl. dazu auch Tabelle 2):

27,8 Gew.-%      Polyester (30 Mol-% DMT-, 40 Mol-% DMI- und 30 Mol-% Sebazat-Einheiten und aus 44 Mol-% EG-, 56 Mol-% Neopentylglykol).

0,2 Gew.-%      Sylysia 430 (synthetisches $SiO_2$, Fuji, Japan) mit einem Partikeldurchmesser von d50 = 3,4 $\mu$m

2 Gew.-%      Antifogmittel, Diethylsulfosuccinat Natriumsalz (Lutensit A BO BASF SE)

70 Gew.-%      Ethylacetat

Der Glaspunkt des Polyesters liegt bei 11 °C und der SV-Wert des Polyesters liegt bei 500. Die Viskosität des Lackes betrug 25 s und die Temperatur des Lackes betrug 19,5 °C.

In Tabelle 2 sind die jeweiligen Anteile der im Peelpolymer enthaltenen Dicarbonsäuren und Glykole in Mol-%, sowie weitere Informationen zur erfindungsgemäßen Folie angegeben.

In Tabelle 3 sind die Eigenschaften der Folie dargestellt. Laut Messungen (Spalte 2), beträgt die Mindestsiegeltemperatur der Folie gegenüber APET- und RPET-Menüschalen 120 °C. Die Folie wurde bei 120, 130, 140 und 150 °C gegen APET-Menüschalen (Hersteller Fa. Faerch K2171-1A tansparent), gesiegelt (Siegeldruck 460 N, Siegelzeit 0,5 s). Anschließend wurden Streifen des Verbundes aus erfindungsgemäßer Folie und APET-Menüschale mittels Spannungs-Dehnungstester entsprechend der vorgenannten Messvorschrift auseinander gezogen. Für alle Siegeltemperaturen zeigte sich das gewünschte Abschälen der Folien von der Menüschale gemäß Figur 3 (Polymer 2). Die gemessenen Siegelnahtfestigkeiten sind in Spalte 3 gelistet. Für alle Siegeltemperaturen wurden peelfähige Folien erhalten: Auch das so wichtige Cold-Peel-Verhalten war einwandfrei. Die Siegelnahtfestigkeiten liegen mit knapp 5 N/15mm im mittleren Bereich, d.h., dass sich die Folien mit kontrollierter Kraftanstrengung von der Menüschale abziehen lassen (= medium peel). Weiterhin hatte die Folie die geforderten guten optischen Eigenschaften, zeigte das gewünschte Handling, das gewünschte Verarbeitungsverhalten und insbesondere das gewünschte Wickelverhalten.

**Beispiel 2**

Im Vergleich zu Beispiel 1 wurde die Trockenmasse der siegelfähigen Schicht (A) von 2,5 g/m$^2$ auf 3,5 g/m$^2$ bei sonst identischem Folienaufbau und sonst identischer Herstellungsweise angehoben. Die Mindestsiegeltemperatur der Folie gegenüber APET- und RPET-Menüschalen beträgt jetzt 116 °C. Für alle Siegeltemperaturen zeigte sich das gewünschte Abschälen der Folien von der Menüschale gemäß Figur 3 (Polymer 2). Die gemessenen Siegelnahtfestigkeiten sind in Spalte 3 gelistet. Für alle Siegeltemperaturen wurden wiederum peelfähige, d.h. auch coldpeel fähige Folien erhalten. Die Siegelnahtfestigkeiten der erfindungsgemäßen Folien sind höher als im Beispiel 1. Sie liegen aber immer noch in einem Bereich, wo sich die Folie ohne große Kraftanstrengung von der Menüschale abziehen lässt. Es wurde eine etwas höhere Trübung der Folie gemessen; das Handling und das Verarbeitungsverhalten der Folie war wie in Beipiel 1. Die Peelfolie nach diesem Beispiel ist zwar teurer als die Peelfolie nach Beispiel 1, sie hat aber den Vorteil, dass hiermit auch schwersiegelbare Menüschalen der Firma Infia (leicht trüb) fest versiegelt werden können.

**Beispiel 3**

Im Vergleich zu Beispiel 1 wurde die Trockenmasse der siegelfähigen Schicht (A) von 3,5 g/m$^2$ auf 4,5 g/m$^2$ bei sonst identischem Folienaufbau und sonst identischer Herstellungsweise angehoben. Die Mindestsiegeltemperatur der Folie gegenüber APET- und RPET-Menüschalen beträgt jetzt 111 °C. Für alle Siegeltemperaturen zeigte sich das gewünschte Abschälen der Folien von der Menüschale gemäß Figur 3 (Polymer 2). Die gemessenen Siegelnahtfestigkeiten sind in Spalte 3 gelistet. Für alle Siegeltemperaturen wurden wiederum peelfähige, d.h. auch coldpeel- fähige Folien erhalten. Die Siegelnahtfestigkeiten der erfindungsgemäßen Folien sind deutlich höher als im Beipiel 1. Es wurde wiederum eine etwas höhere Trübung der Folie gemessen; das Handling und das Verarbeitungsverhalten der Folie war wie in Beipiel 1. Die Peelfolie nach diesem Beispiel hat den Vorteil, dass hiermit auch durch schwer siegelbaren Menüschalen gesiegelt werden kann, die insbesondere bei RPET-Menüschalen anzutreffen sind.

**Beispiel 4**

Im Vergleich zu Beispiel 1 wurde bei sonst identischem Folienaufbau die Zusammensetzung des Lackes für die siegelfähige Deckschicht (A) geändert. Der Lack besteht jetzt aus den folgenden Rohstoffanteilen

| | |
|---|---|
| 27,8 Gew.-% | Polyester (45 Mol-% DMT-, 32 Mol-% DMI-, 10 Mol-% Sebazat - und 13 Mol-% Adipatat-Einheiten und aus 35 Mol-% EG-, 25 Mol-% DEG-, 15 Mol-% PD-, 6 Mol-% BD- und 19 Mol-% Neopentylglykol-Einheiten). |
| 0,2 Gew.-% | Sylysia 430 (synthetisches $SiO_2$, Fuji, Japan) mit einem Partikeldurchmesser von $d_{50}$ = 3,4 $\mu$m |
| 2 Gew.-% | Antifogmittel, Lutensit A BO BASF SE |
| 70 Gew.-% | Ethylacetat |

Die Mindestsiegeltemperatur der Folie gegenüber APET-Menüschalen beträgt jetzt 113 °C. Für alle Siegeltemperaturen zeigte sich das gewünschte Abschälen der Folien von der Menüschale gemäß Figur 3 (Polymer 2). Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Das Handling, das Verarbeitungsverhalten und insbesondere das Wickelverhalten der Folie war wie in Beipiel 1.

**Vergleichsbeispiel 1**

Im Vergleich zu Beispiel 1 wurde Beispiel 1 aus der EP 1 475 228 B1 nachgearbeitet.

In Tabelle 3 sind die Eigenschaften der Folie dargestellt. Obwohl die Folie hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie direkt ein. Die Folie zeigt "weldable" Verhalten und ist damit für die Lösung der genannten Aufgabe ungeeignet.

**Vergleichsbeispiel 2**

Im Vergleich zu Beispiel 1 wurde - unter sonst gleichen Bedingungen - die Beschichtung (A) ohne nachfolgende Glättung, d.h. ohne "smoothing bar" aufgebracht.

Bei der Aufrollung der beschichteten Folie und nachfolgendem Probeabziehen der Peelfolie von der Rolle wurde ein deutliches Abrollgeräusch festgestellt. Beim Schneiden der Masterrolle in kleine Schnittrollen für die Kundenanwendung, wurde eine verstärkte Haftung der Folienlagen untereinander beobachtet. Durch die große Haftung zwischen den einzelnen Folienlagen kam es zu Folienabrissen in der Maschine, was zum Abbruch der Schneidoperation führt. Das Wickelverhalten der Peelfolie ist ungenügend und entspricht nicht den Erfordernissen.

Die Folie zeichnet sich durch eine Topographie der Deckschicht (A) aus, wie sie in Figur 10 dargestellt ist. Im Oberflächenplott für die Deckschicht (A) sind neben den "üblichen Erhebungen (Protrusions)", zusätzliche Erhebungen zu sehen, die in ihrem Durchmesser um ein Vielfaches größer sind als die sie umgebenden Spitzen.

## Tabelle 2

| | | Zusammensetzung Polyester zur Bildung von Deckschicht (A) | | | | | | | | | | Glastemperatur Polyester | SV-Wert Polyester | Folienaufbau | Foliendicke, ca. | Masse d. Deckschicht (A) | Antifogmittel und Konzentration in Schicht (A) | Partikel in B' der biaxial orientierten Polyesterfolie | |
|---|---|---|---|---|---|---|---|---|---|---|---|---|---|---|---|---|---|---|---|
| | | Dicarbonsäuren | | | | | Diole | | | | | | | | | | | | |
| | | DMT | DMI | AzS | SeS | AdS | 1,2-EG | DEG | PD | BD | NG | | | | | | | Durchmesser | Konzentration |
| | | Mol-% | | | | | Mol-% | | | | | °C | | | µm | g/m² | | µm | Gew.-% |
| Beispiele | 1 | 30 | 40 | | 30 | | 44 | | | | 56 | 11 | 500 | AB | 25 | 2,5 | Lutensit A BO BASF SE/2 | 3,4 | 0,20 |
| | 2 | 30 | 40 | | 30 | | 44 | | | | 56 | 11 | 500 | AB | 25 | 3,5 | Lutensit A BO BASF SE/2 | 3,4 | 0,20 |
| | 3 | 30 | 40 | | 30 | | 44 | | | | 56 | 11 | 500 | AB | 25 | 4,5 | Lutensit A BO BASF SE/2 | 3,4 | 0,20 |
| | 4 | 45 | 32 | | 10 | 13 | 35 | 25 | 15 | 7 | 18 | 12 | 500 | AB | 25 | 2,5 | Lutensit A BO BASF SE/2 | 3,4 | 0,20 |
| Vergl.-Beispiel | 1 | | | | | | | | | | | 75 | | ABC | 25 | 1 | | 3,4 | 5 |
| | 2 | 30 | 40 | | 30 | | 44 | | | | 56 | 11 | 500 | AB | 25 | 2,5 | Lutensit A BO BASF SE/2 | 3,4 | 0,20 |
| | DMT Dimethylterephthalat, DMI Dimethylisophthalat, EG Ethandiol, DEG Diethylenglykol, PD Propandiol, BD Butandiol, NG Neopentylglykol | | | | | | | | | | | | | | | | | | |
| | AzS Azelat, SeS Sebazat, AdS Adipat | | | | | | | | | | | | | | | | | | |

## Tabelle 3

| | | Mindest siegel temperatur °C | Sieglenahtfestigkeit gegenüber APET-Menüschalen bei Temperatur in °C | | | | Cold-peel and Reworkabil ty | Trübung % | Clarity % | Glanz A-Seite B-Seite | | Trans parenz % | arithmetischer Mittelwert der absoluten Ordinatenwerte Sa A-Seite B-Seite nm | | Reduzierte Spitzenhöhe Spk A-Seite nm | E-Modul N/mm$^2$ | Schrumpf % | Antifog-verhalten | Wasser- und Olivenöltest | Wickelverh alten |
|---|---|---|---|---|---|---|---|---|---|---|---|---|---|---|---|---|---|---|---|---|
| | | | 120 | 130 | 140 | 150 N/15mm | | | | | | | | | | | | | | |
| Beispiele | 1 | 120 | 4,2 | 4,7 | 5,2 | 4,8 | ++++ | 11 | 92 | 75 | 130 | 90,5 | 135 | 60 | 551 | 4500 | 2,1 | gut-bestanden | bestanden | sehr gut |
| | 2 | 116 | 4,9 | 5,7 | 5,8 | 5,8 | ++++ | 12 | 91 | 74 | 130 | 90,2 | 175 | 60 | 581 | 4300 | 2,1 | gut-bestanden | bestanden | sehr gut |
| | 3 | 111 | 6,4 | 6,5 | 6,9 | 6,2 | ++++ | 13 | 88 | 73 | 130 | 90,1 | 230 | 60 | 622 | 4200 | 2 | gut-bestanden | bestanden | sehr gut |
| | 4 | 113 | 5 | 5,2 | 5,7 | 5,6 | ++++ | 10 | 91 | 79 | 130 | 90,8 | 136 | 60 | 551 | 4600 | 2,1 | gut-bestanden | bestanden | sehr gut |
| | 5 | | | | | | | | | | | | | | | | | | | |
| V-Beispiele | 1 | 130 | 1,7 | 2,5 | 5 | 8 | - | 23 | 85 | 55 | 130 | | 310 | 60 | | | | | | sehr gut |
| | 2 | 120 | 4,2 | 4,7 | 5,2 | 4,8 | ++++ | 12 | 91 | 74 | 130 | 90 | 430 | 60 | 1051 | 4500 | 2,1 | gut-bestanden | bestanden | mangelhaft |

Coldpeel ++++ Bei allen Siegeltemperaturen wird Folie von der Menüschale "gepeelt", ohne dass dabei die Folie ein- oder weiterreißt. Einwandfreies, sattes, sauberes Peelen der Folie von Menüschale, auch im oberen Temperaturbereich bei hoher Siegelnahtfestigkeit (medium peel).

- Bei allen Siegeltemperaturen reißt Folie beim Abziehen von der Meüschale ein.

**Patentansprüche**

1. Transparente, peelfähige Polyesterfolie umfassend mindestens eine biaxial orientierte Polyesterfolie (= Basisschicht (B)) und mindestens eine darauf offline beschichtete peelfähige Deckschicht (A), wobei die Deckschicht (A) zu mindestens 85 Gew.-% aus einem Polyester aus aromatischen und aliphatischen Dicarbonsäuren und aliphatischen Diolen aufgebaut ist, und wobei der arithmetische Mittelwert der absoluten Ordinatenwerte $S_a$ der Deckschicht (A) kleiner ist als 300 nm und die reduzierte Spitzenhöhe $S_{pk}$ der Deckschicht (A) kleiner ist als 700 nm, und wobei die Deckschicht (A) Partikel mit einem mittleren Partikeldurchmesser $d_{50}$ von 2,0 bis 8 $\mu$m in einer Konzentration von 0,1 bis 10 Gew.-% enthält, und wobei die Sa- und Spk-Parameter gemäß der in der Norm ISO 25178-2 angegebenen Rechenvorschriften bestimmt werden.

2. Polyesterfolie nach Anspruch 1, **dadurch gekennzeichnet, dass** der arithmetische Mittelwert der absoluten Ordinatenwerte $S_a$ der Deckschicht (A) kleiner ist als 250 nm, bevorzugt kleiner ist als 200 nm und die reduzierte Spitzenhöhe $S_{pk}$ kleiner ist als 690 nm, bevorzugt kleiner ist als 680 nm.

3. Polyesterfolie nach Anspruch 1 oder 2, **dadurch gekennzeichnet, dass** die Deckschicht (A) weitere Substanzen ausgewählt aus der Gruppe bestehend aus Partikeln, Additiven, Hilfsmitteln, Gleitmittel, Antifogmittel und Mischungen derselben enthält.

4. Polyesterfolie nach einem oder mehreren der Ansprüche 1 bis 3, **dadurch gekennzeichnet**, die Gesamtdicke der Polyesterfolie 3 bis 200 $\mu$m, bevorzugt 4 bis 150 $\mu$m, besonders bevorzugt 5 bis 100 $\mu$m beträgt, wobei die Schicht (B) einen Anteil von 45 bis 97 % an der Gesamtdicke hat.

5. Polyesterfolie nach einem oder mehreren der Ansprüche 1 bis 4, **dadurch gekennzeichnet, dass** die Folie eine Siegelanspringtemperatur (= Mindestsiegeltemperatur) gegenüber APET- und RPET- Menüschalen von nicht mehr als 115 °C, eine max. Siegeltemperatur von ca. 160 °C und eine Siegelnahtfestigkeit (=Peel-Kraft) gegenüber APET- und RPET - Menüschalen von mindestens 3,0 N besitzt.

6. Polyesterfolie nach einem der Ansprüche 1 bis 5, **dadurch gekennzeichnet, dass** der peelfähige Polyester der Deckschicht (A) die folgenden, von Dicarbonsäure abgeleiteten Einheiten und von Diol abgeleiteten Einheiten, jeweils bezogen auf die gesamte Menge an Dicarbonsäure-basierten - bzw. Diol-basierten Wiederholungseinheiten enthält:

   • 25 bis 85 Mol-% Terephthalat,
   • 5 bis 50 Mol-% Isophthalat,
   • 5 bis 50 Mol-% Adipat,
   • 0 bis 30 Mol-% Azelat,
   • 5 bis 50 Mol-% Sebazat,
   • Mehr als 10 Mol-% Ethylenglykol
   • Mehr als 10 Mol-% eines oder mehrerer Diole ausgewählt aus der Gruppe bestehend aus: $C_3$ bis $C_7$ -Diolen, Di-, Tri- oder Tetra-$C_2$ bis $C_4$-AlkylenGlykolen.

7. Polyesterfolie nach einem der Ansprüche 1 bis 6, **dadurch gekennzeichnet, dass** die Glasübergangstemperatur des peelfähigen Polyesters der Deckschicht (A) zwischen 0 und 30 °C liegt.

8. Verfahren zur Herstellung einer Polyesterfolie nach einem oder mehreren der Ansprüche 1 bis 7, **dadurch gekennzeichnet, dass** die mindestens eine Basisschicht (B) mittels Extrusion hergestellt, biaxial gestreckt, thermofixiert und aufgerollt wird, anschließend offline mittels üblicher Beschichtungstechnologie eine Peel-Beschichtungszusammensetzung zur Bildung der Deckschicht (A) an die Basisfolie nass angetragen wird, die Polyesterfolie auf der Beschichtungsseite (A) mittels einer sich drehenden Walze geglättet und anschließend getrocknet und aufgewickelt wird.

9. Verfahren nach Anspruch 8, **dadurch gekennzeichnet, dass** die sich drehenden Walze eine glatte Oberfläche besitzt und die Walze im Gleichlauf oder im Gegenlauf zur Folienbahnrichtung, bevorzugt im Gegenlauf zur Folienbahnrichtung betrieben wird.

10. Verfahren nach Anspruch 8 oder 9, **dadurch gekennzeichnet, dass** die Geschwindigkeit der sich drehenden Walze 20 bis 200 % der Folienbahngeschwindigkeit beträgt und der Umschlingungswinkel der Folie im Bereich von 0 bis 90 °, bevorzugt 0 bis 45 ° und besonders bevorzugt 0 bis 20 ° liegt.

11. Verfahren nach einem oder mehreren der Ansprüche 8 bis 10, **dadurch gekennzeichnet, dass** die sich drehende Walze einen Durchmesser von 2 bis 8 cm besitzt.

12. Verfahren nach einem oder mehreren der Ansprüche 8 bis 11, **dadurch gekennzeichnet, dass** die Viskosität der Peel-Beschichtungszusammensetzung - gemessen in der Wanne und im Zulaufbehälter mittels DIN 4-Auslaufbecher - 10 bis 50 s, vorzugsweise 16 bis 32 s und besonders bevorzugt 17 bis 30 s.

13. Verfahren nach einem oder mehreren der Ansprüche 8 bis 12, **dadurch gekennzeichnet, dass** die Temperatur der Peel-Beschichtungszusammensetzung (gemessen in einer Wanne und einem Zulaufbehälter) 10 bis 40 °C, bevorzugt 16 bis 28 °C, besonders bevorzugt 18 bis 25 °C beträgt.

14. Verwendung der Polyesterfolie nach einem oder mehreren der Ansprüche 1 bis 8 als Siegelfolie.

15. Verwendung nach Anspruch 14 als Siegelfolie für APET- und/oder RPET-Menüschalen.

## Claims

1. Transparent, peelable polyester film comprising at least one biaxially oriented polyester film (= base layer (B)) and at least one peelable outer layer (A) coated thereon offline, where the outer layer (A) is composed of at least 85 % by weight of a polyester of aromatic and aliphatic dicarboxylic acids and aliphatic diols, and where the arithmetic mean value of the absolute ordinate values $S_a$ of the outer layer (A) is less than 300 nm and the reduced peak height $S_{pk}$ of the outer layer (A) is less than 700 nm, and where the outer layer (A) comprises particles with a median particle diameter $d_{50}$ of 2.0 to 8 $\mu$m at a concentration of 0.1 to 10 % by weight, and where the Sa and Spk parameters are determined in accordance with the calculation methods defined in the standard ISO 25178-2.

2. Polyester film according to Claim 1, **characterized in that** the arithmetic mean of the absolute ordinate values $S_a$ of the outer layer (A) is less than 250 nm, preferably less than 200 nm, and the reduced peak height $S_{pk}$ is less than 690 nm, preferably less than 680 nm.

3. Polyester film according to Claim 1 or 2, **characterized in that** the outer layer (A) comprises further substances selected from the group consisting of particles, additives, auxiliaries, lubricants, antifogging agents and mixtures thereof.

4. Polyester film according to one or more of Claims 1 to 3, **characterized in that** the total thickness of the polyester film is 3 to 200 $\mu$m, preferably 4 to 150 $\mu$m, particularly preferably 5 to 100 $\mu$m, where the proportion of the layer (B) in the total thickness is 45 to 97 %.

5. Polyester film according to one or more of Claims 1 to 4, **characterized in that** the film has a sealing onset temperature (= minimum sealing temperature) in relation to APET trays and RPET trays of not more than 115 °C, a max. sealing temperature of about 160 °C and a seal seam strength (= peel force) in relation to APET trays and RPET trays of at least 3.0 N.

6. Polyester film according to any of Claims 1 to 5, **characterized in that** the peelable polyester of the outer layer (A) comprises the following units derived from dicarboxylic acid and units derived from diol, respectively based on the total quantity of dicarboxylic-acid-based and diol-based repeating units:

   - 25 to 85 mol% of terephthalate,
   - 5 to 50 mol% of isophthalate,
   - 5 to 50 mol% of adipate,
   - 0 to 30 mol% of azelate,
   - 5 to 50 mol% of sebacate,
   - more than 10 mol% of ethylene glycol,
   - more than 10 mol% of one or more diols selected from the group consisting of : $C_3$ to $C_7$ diols and di-, tri- and tetra-$C_2$ to $C_4$-alkylene glycols.

7. Polyester film according to any of Claims 1 to 6, **characterized in that** the glass transition temperature of the peelable polyester of the outer layer (A) is between 0 and 30 °C.

8. Process for production of a polyester film according to one or more of Claims 1 to 7, **characterized in that** the at least one base layer (B) is produced by extrusion, biaxially stretched, heat-set and wound up, and then a peel coating composition for formation of the outer layer (A) is applied in liquid form offline onto the base film by means of conventional coating technology, and the polyester film is smoothed on the coating side (A) by means of a rotating roll and is then dried and wound up.

9. Process according to Claim 8, **characterized in that** the rotating roll has a smooth surface and the roll is driven in a direction which is the same as, or opposite to, preferably opposite to, the direction in which the film web is moving.

10. Process according to Claim 8 or 9, **characterized in that** the speed of the rotating roll is 20 to 200 % of the film web speed and the wrap angle of the film is in the range of 0 to 90 °, preferably 0 to 45 ° and particularly preferably 0 to 20 °.

11. Process according to one or more of Claims 8 to 10, **characterized in that** the diameter of the rotating roll is 2 to 8 cm.

12. Process according to one or more of Claims 8 to 11, **characterized in that** the viscosity of the peel coating composition - measured in the trough and in the feed tank by means of a DIN 4 flow cup - is 10 to 50 s, preferably 16 to 32 s and particularly preferably 17 to 30 s.

13. Process according to one or more of Claims 8 to 12, **characterized in that** the temperature of the peel coating composition (measured in a trough and in a feed tank) is 10 to 40 °C, preferably 16 to 28 °C, particularly preferably 18 to 25 °C.

14. Use of the polyester film according to one or more of Claims 1 to 8 as sealable film.

15. Use according to Claim 14 as sealable film for APET trays and/or RPET trays.

**Revendications**

1. Film de polyester transparent, pelable, comprenant au moins un film de polyester orienté biaxialement (= couche de base (B)) et au moins une couche de recouvrement pelable (A) appliquée hors ligne sur celle-ci, dans lequel la couche de recouvrement (A) est constituée à au moins 85 % en poids d'un polyester d'acides dicarboxyliques aromatiques et aliphatiques et de diols aliphatiques, et dans lequel la moyenne arithmétique des ordonnées absolues $S_a$ de la couche de recouvrement (A) est inférieure à 300 nm et la hauteur de pic réduite $S_{pk}$ de la couche de recouvrement (A) est inférieure à 700 nm, et dans lequel la couche de recouvrement (A) contient des particules ayant un diamètre particulaire moyen $d_{50}$ de 2,0 à 8 $\mu$m en une concentration de 0,1 à 10 % en poids, et dans lequel les paramètres $S_a$ et $S_{pk}$ sont déterminés selon les principes de calcul indiqués dans la norme ISO 25178-2.

2. Film de polyester selon la revendication 1, **caractérisé en ce que** la moyenne arithmétique des ordonnées absolues $S_a$ de la couche de recouvrement (A) est inférieure à 250 nm, de préférence inférieure à 200 nm et la hauteur de pic réduite $S_{pk}$ est inférieure à 690 nm, de préférence inférieure à 680 nm.

3. Film de polyester selon la revendication 1 ou 2, **caractérisé en ce que** la couche de recouvrement (A) contient d'autres substances choisies dans le groupe consistant en des particules, des additifs, des adjuvants, des lubrifiants, des agents antibuée et des mélanges de ceux-ci.

4. Film de polyester selon une ou plusieurs des revendications 1 à 3, **caractérisé en ce que** l'épaisseur totale du film de polyester est de 3 à 200 $\mu$m, de préférence de 4 à 150 $\mu$m, le plus préférentiellement de 5 à 100 $\mu$m, dans lequel la couche (B) présente une proportion de 45 à 97 % de l'épaisseur totale.

5. Film de polyester selon une ou plusieurs des revendications 1 à 4, **caractérisé en ce que** le film possède une température d'amorçage de scellage (= température de scellage minimale) par rapport aux barquettes en APET et RPET non supérieure à 115 °C, une température de scellage maximale d'environ 160 °C et une résistance du cordon de scellage (= force de pelage) d'au moins 3,0 N par rapport aux barquettes en APET et RPET.

**6.** Film de polyester selon l'une quelconque des revendications 1 à 5, **caractérisé en ce que** le polyester pelable de la couche de recouvrement (A) contient les motifs suivants dérivés d'acide dicarboxylique et motifs dérivés de diols, respectivement par rapport à la quantité totale de motifs répétitifs à base d'acide dicarboxylique ou à base de diol :

- 25 à 85 % en mole de téréphtalate,
- 5 à 50 % en mole d'isophtalate,
- 5 à 50 % en mole d'adipate,
- 0 à 30 % en mole d'azélate,
- 5 à 50 % en mole de sébaçate,
- plus de 10 % en mole d'éthylène glycol
- plus de 10 % en mole d'un ou plusieurs diols choisis dans le groupe consistant en : des diols en $C_3$ à $C_7$, des di-, tri- ou tétra-alkylène glycol en $C_2$ à $C_4$.

**7.** Film de polyester selon l'une quelconque des revendications 1 à 6, **caractérisé en ce que** la température de transition vitreuse du polyester pelable de la couche de recouvrement (A) se situe entre 0 et 30 °C.

**8.** Procédé de fabrication d'un film de polyester selon une ou plusieurs des revendications 1 à 7, **caractérisé en ce que** l'au moins une couche de base (B) est fabriquée par extrusion, étirée biaxialement, thermofixée et enroulée, ensuite une composition de revêtement pelable est apposée à l'état mouillé hors ligne par une technique de revêtement habituelle pour la formation de la couche de recouvrement (A) sur le film de base, le film de polyester est lissé sur le côté de revêtement (A) par un cylindre tournant et est ensuite séché et enroulé.

**9.** Procédé selon la revendication 8, **caractérisé en ce que** le cylindre tournant possède une surface lisse et le cylindre est actionné dans le sens de la marche ou dans le sens contraire de la marche par rapport à la direction de la bande de film, de préférence dans le sens contraire de la marche par rapport à la direction de la bande de film.

**10.** Procédé selon la revendication 8 ou 9, **caractérisé en ce que** la vitesse du rouleau tournant est de 20 à 200 % de la vitesse de la bande de film et l'angle d'enveloppement du film se situe dans la plage de 0 à 90 °, de préférence de 0 à 45 ° et le plus préférentiellement de 0 à 20 °.

**11.** Procédé selon une ou plusieurs des revendications 8 à 10, **caractérisé en ce que** le cylindre tournant possède un diamètre de 2 à 8 cm.

**12.** Procédé selon une ou plusieurs des revendications 8 à 11, **caractérisé en ce que** la viscosité de la composition de revêtement pelable, mesurée dans la cuve et dans le contenant d'arrivée par des coupes de viscosité à écoulement DIN 4 est de 10 à 50 s, de préférence de 16 à 32 s et le plus préférentiellement de 17 à 30 s.

**13.** Procédé selon une ou plusieurs des revendications 8 à 12, **caractérisé en ce que** la température de la composition de revêtement pelable (mesurée dans une cuve et dans un contenant d'arrivée) est de 10 à 40 °C, de préférence de 16 à 28 °C, le plus préférentiellement de 18 à 25 °C.

**14.** Utilisation du film de polyester selon une ou plusieurs des revendications 1 à 8 en tant que film de scellage.

**15.** Utilisation selon la revendication 14 en tant que film de scellage pour des barquettes en APET et/ou RPET.

## Fig. 1

## Fig. 2

## Fig. 3

## Fig. 4

## Fig. 5

## Fig. 6

## Fig. 7

## Fig. 8

3000.000nm

-1000.000nm

0.315

0.631

0.946

1.262 mm

## Fig. 9

## Fig. 10

4617.042nm

-5833.997nm

0.315

0.631

0.946

1.262 mm

**IN DER BESCHREIBUNG AUFGEFÜHRTE DOKUMENTE**

**In der Beschreibung aufgeführte Patentdokumente**

- EP 0379190 A
- EP 1475228 B1
- WO 0205186 A1
- WO 2015148685 A1
- WO 2016083521 A1
- EP 1942002 A
- WO 9413476 A
- EP 0144878 A
- US 4252885 A
- EP 0296620 A
- WO 9413481 A

**In der Beschreibung aufgeführte Nicht-Patentliteratur**

- **M. LAKE.** Oberflächentechnik in der Kunststoffverarbeitung. Hanser, 2009
- **E. DÖRSAM.** Printing Technology for Electronics, 4. Ink Transfer in the Printing Process. Technische Universität Darmstadt, 01. Juni 2012
- **AHLHAUS, O.E.** Verpackung mit Kunststoffen. Carl Hanser Verlag, 1997, 271